(19) Europäisches Patentamt / European Patent Office / Office européen des brevets

(11) **EP 2 329 309 B1**

(12) **EUROPÄISCHE PATENTSCHRIFT**

(45) Veröffentlichungstag und Bekanntmachung des Hinweises auf die Patenterteilung:
**23.05.2018  Patentblatt 2018/21**

(21) Anmeldenummer: **09782969.1**

(22) Anmeldetag: **14.09.2009**

(51) Int Cl.:
*G02B 27/01* (2006.01)   *G02B 6/34* (2006.01)

(86) Internationale Anmeldenummer:
**PCT/EP2009/061871**

(87) Internationale Veröffentlichungsnummer:
**WO 2010/034639 (01.04.2010 Gazette 2010/13)**

(54) **ANZEIGEVORRICHTUNG UND ANZEIGEVERFAHREN**

DISPLAY DEVICE AND DISPLAY METHOD

DISPOSITIF D'AFFICHAGE ET PROCÉDÉ D'AFFICHAGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008   DE 102008049407**

(43) Veröffentlichungstag der Anmeldung:
**08.06.2011   Patentblatt 2011/23**

(73) Patentinhaber: **tooz technologies GmbH**
**73430 Aalen (DE)**

(72) Erfinder:
- **LINDIG, Karsten**
  **99084 Erfurt (DE)**
- **DOBSCHAL, Hans-Jürgen**
  **99510 Kleinromstedt (DE)**
- **RUDOLPH, Günter**
  **07743 Jena (DE)**

(74) Vertreter: **Grimm, Christian**
**Geyer, Fehners & Partner mbB**
**Patentanwälte**
**Perhamerstrasse 31**
**80687 München (DE)**

(56) Entgegenhaltungen:
EP-A1- 0 922 985    EP-A2- 1 158 336
WO-A1-00/28592    WO-A1-2008/089992
WO-A2-02/06858    WO-A2-93/18428
DE-A1-102006 022 962    GB-A- 1 359 499
US-A1- 2007 189 701    US-B1- 6 379 009

- **SHECHTER R ET AL: "PLANAR HOLOGRAPHIC CONFIGURATION FOR EFFICIENT IMAGING", OPTICS COMMUNICATIONS, NORTH-HOLLAND PUBLISHING CO. AMSTERDAM, NL, Bd. 132, Nr. 3/04, 1. Dezember 1996 (1996-12-01), Seiten 221-226, XP000630369, ISSN: 0030-4018, DOI: DOI:10.1016/0030-4018(96)00379-3**

EP 2 329 309 B1

**Beschreibung**

Die vorliegende Erfindung betrifft eine Anzeigevorrichtung gemäß dem Oberbegriff des Anspruches 1 sowie ein Anzeigeverfahren gemäß dem Oberbegriff des Anspruches 9.

Eine solche Anzeigevorrichtung und ein solches Anzeigeverfahren sind z.B. aus der EP 0 922 985 A1 oder aus der WO 2008/089992 A1 bekannt. Schwierig ist es hierbei, das Bild so zu erzeugen, daß es der Benutzer in gutem Kontrast zur Umgebung wahrnehmen kann, da die Helligkeit der Umgebung sehr stark schwanken kann.

Die WO 00/28592 A1 zeigt eine Anzeigevorrichtung, bei der ein Bild mit einem scannenden Lichtstrahl erzeugt und die Messung der Intensität der Umgebungshelligkeit mit einem separaten Lichtsensor durchgeführt wird.

Ausgehend hiervon ist es Aufgabe der Erfindung, eine Anzeigevorrichtung der eingangs genannten Art so weiterzubilden, daß bei der Überlagerung ein guter Kontrast des erzeugten Bildes relativ zur wahrnehmbaren Umgebung erzielt wird. Ferner soll ein entsprechendes Anzeigeverfahren bereitgestellt werden.

Die Aufgabe wird bei einer Anzeigevorrichtung der eingangs genannten Art dadurch gelöst, daß ein mit der Steuereinheit verbundener Detektor vorgesehen ist, der die Intensität von über den ersten Auskoppelabschnitt in das Multifunktionsglas eingekoppeltem, in diesem bis zum zweiten Auskoppelabschnitt geführtem und über den zweiten Auskoppelabschnitt aus dem Multifunktionsglas ausgekoppeltem Umgebungslicht mißt, wobei die Steuereinheit in Abhängigkeit der vom Detektor gemessenen Intensität die Helligkeit bei der Erzeugung des Bildes mittels des Bilderzeugungsmoduls steuert.

Damit läßt sich eine ausgezeichnete Anpassung an die Umgebungshelligkeit erreichen. Gleichzeitig ist der optische Aufbau einfach, da der erste Auskoppelabschnitt, der zur Überlagerung des erzeugten Bildes mit der wahrnehmbaren Umgebung notwendig ist, auch gleich zur Einkopplung von Umgebungslicht in das Multifunktionsglas verwendet wird.

Insbesondere können der zweite Auskoppelabschnitt und der Einkoppelabschnitt derselbe Abschnitt sein. In diesem Fall kann der Strahlengang, durch den das Bild im Multifunktionsglas vom Einkoppelabschnitt bis zum ersten Auskoppelabschnitt geführt wird, gleich dazu genutzt werden, um in entgegengesetzter Richtung vom eingekoppelten Umgebungslicht durchlaufen zu werden.

Ferner kann zwischen dem zweiten Auskoppelabschnitt und dem Bilderzeugungsmodul ein Strahlteiler angeordnet sein, der das aus dem zweiten Auskoppelabschnitt ausgekoppelte Licht auf den Detektor lenkt. Somit kann der optische Aufbau einer bekannten Anzeigevorrichtung der eingangs genannten Art grundsätzlich beibehalten werden, solange der Strahlteiler zwischen dem Bilderzeugungsmodul und dem Multifunktionsglas angeordnet werden kann.

Es ist jedoch auch möglich, den Einkoppelabschnitt so auszubilden, daß er die Funktion des Strahlteilers verwirklicht. Dies führt zu einer sehr kompakten Anzeigevorrichtung.

Bei der Anzeigevorrichtung kann die Steuereinheit während der Intensitätsmessung mittels des Detektors die Bilderzeugung des Bilderzeugungsmoduls unterbrechen. Damit können unerwünschte Streulichteinflüsse vom Bilderzeugungsmodul bei der Messung der Intensität vermindert werden. Insbesondere wird die Bilderzeugung so kurz unterbrochen, daß ein Benutzer die Bildunterbrechung nicht wahrnehmen kann.

Auf der Vorderseite des Multifunktionsglases kann eine phototrope Schicht ausgebildet sein. Diese kann entweder als passive oder als aktive Schicht, deren Transmissionsgrad gesteuert werden kann, ausgebildet werden. Da die Umgebungshelligkeit nach Durchlaufen der phototropen Schicht gemessen wird, wird somit gleich der Einfluß der Verringerung der Transmission aufgrund der phototropen Schicht berücksichtigt.

Der erste Auskoppelabschnitt kann auf der Vorderseite oder der Rückseite des Multifunktionsglases ausgebildet sein. Er kann als holografisches Element, diffraktives Element oder refraktives Element ausgebildet sein.

Die Anzeigevorrichtung kann für ein Auge des Benutzers ausgebildet werden. Es ist jedoch auch möglich, sie für beide Augen des Benutzers auszubilden, wobei dann zwei Multifunktionsgläser (eins für das rechte und eins für das linke Auge des Benutzers) vorhanden sind. Bei dieser binokularen Ausbildung kann das Bild als Stereobild dargestellt werden.

Ferner ist es möglich, daß der Detektor nicht nur die Helligkeit als solche mißt, sondern eine ortsaufgelöste Messung der Helligkeit durchführt. Insbesondere kann die wahrnehmbare Umgebung als Bild in den Detektor abgebildet und von diesem aufgenommen werden. Damit ist es möglich, die Helligkeit bei der Bilderzeugung ortsaufgelöst zu variieren, so daß z.B. bei Hell-Dunkel-Übergängen in der wahrnehmbaren Umgebung das eingespiegelte Bild eine angepaßte Bildhelligkeit aufweist, um den gewünschten Kontrast zu erreichen. So kann beispielsweise bei Darstellung eines Textes der Bereich des Textes, der im hellen Bereich der Umgebung liegt, dunkel dargestellt werden, und der Teil des Textes, der im dunklen Bereich der Umgebung liegt, hell dargestellt werden.

Der Auskoppelabschnitt kann einen ersten Abschnitt und einen zweiten Abschnitt aufweisen, wobei nur der erste Abschnitt, der aus einer Vielzahl von voneinander beabstandeten, reflektiven und/oder refraktiven Umlenkelementen gebildet ist, die Umlenkung des Bildes durch Reflexion und/oder Brechung bewirkt. Insbesondere kann der Auskoppelabschnitt in den ersten und zweiten Abschnitt aufgeteilt sein.

Aufgrund der Umlenkelemente, die reflektiv und/oder refraktiv wirken, kann eine Umlenkung des Bildes für große Wellenlängenbereiche realisiert werden (insbesondere im Vergleich zur Umlenkung mit Beugungsgittern).

Der erste Abschnitt kann eine abbildende Funktion für das Bild besitzen. Damit wird nicht nur die gewünschte Umlenkung bewirkt, sondern auch gleich eine abbildende Eigenschaft mittels dem ersten Abschnitt realisiert. Die abbildende Eigenschaft des ersten Abschnittes kann einer gedachten optischen Wirkfläche entsprechen, die gekrümmt ist und bevorzugt keine Spiegel- und Rotationssymmetrie aufweist. Auch kann die Wirkfläche keine Translationssymmetrie aufweisen. Natürlich ist es auch möglich, daß die gedachte optische Wirkfläche rotationssymmetrisch (z.B. Rotationsasphäre) oder torisch ist.

Insbesondere kann die Fläche des ersten Abschnitts, in Draufsicht auf den ersten Auskoppelabschnitt gesehen, vorzugsweise 5 bis 30 % der Fläche des ersten Auskoppelabschnittes betragen. Der Anteil des ersten Abschnittes am ersten Auskoppelabschnitt kann aber auch 50 % oder mehr betragen.

Die Umlenkelemente können an einer Materialgrenzfläche des Körpers ausgebildet sein. Damit ist eine besonders einfache Herstellung möglich, z. B. mittels Diamantfräsen. Ferner ist eine Herstellung durch Abform- und Gußverfahren möglich.

Jedes Umlenkelement kann plan ausgebildet sein. Es ist jedoch auch eine gekrümmte Ausbildung der einzelnen Umlenkelemente möglich.

Insbesondere können alle Umlenkelemente gleich ausgebildet sein. Alternativ kann die Ausbildung der Umlenkelemente variieren.

Die Umlenkelemente sind bevorzugt unregelmäßig im ersten Auskoppelabschnitt verteilt, können polygonförmig ausgebildet sein und/oder eine maximale Ausdehnung im Bereich von bevorzugt 20 - 30 $\mu$m aufweisen. Die maximale Ausdehnung kann aber auch 200 $\mu$m oder 100 $\mu$m betragen.

Der erste Auskoppelabschnitt kann so ausgebildet sein, daß der Teil des Umgebungslichtes, der auf den ersten Abschnitt trifft, abgeschattet und somit nicht für den Benutzer wahrnehmbar wird. Alternativ ist es auch möglich, daß der erste Abschnitt für das Umgebungslicht transmissiv ist.

Der erste Abschnitt kann in Art einer nicht zusammenhängenden Fresnel-Struktur ausgebildet sein. Die Fresnel-Struktur kann eine abbildende Eigenschaft aufweisen, die der gedachten optischen Wirkfläche entspricht.

Die reflektive Ausbildung der Umlenkelemente kann durch eine reflektive Beschichtung erfolgen. Die reflektive Beschichtung kann zu einer vollständigen Reflexion oder auch zu einer teilweisen Reflexion führen. Ferner ist es möglich, die reflektive Wirkung durch innere Totalreflexion zu realisieren. In diesem Fall ist keine reflektive Beschichtung notwendig.

Das Multifunktionsglas kann insbesondere so ausgebildet sein, daß das Bild des Bilderzeugungsmoduls im Multifunktionsglas bis zum ersten Auskoppelabschnitt geführt wird. Dies kann beispielsweise durch Reflexionen an den Materialgrenzflächen erfolgen. Insbesondere können dies interne Totalreflexionen sein.

Ferner kann der zweite Abschnitt des ersten Auskoppelabschnittes das Umgebungslicht transmittieren.

Die erfindungsgemäße Anzeigevorrichtung kann als HMD-Vorrichtung (Head-Mounted-DisplayVorrichtung) bezeichnet werden. Die Anzeigevorrichtung kann dem Fachmann bekannte weitere Elemente zum Betrieb der Anzeigevorrichtung umfassen.

Bei der erfindungsgemäßen Anzeigevorrichtung kann der zweite Auskoppelabschnitt und/oder der Einkoppelabschnitt als Fresnel-Struktur mit abbildender Eigenschaft ausgebildet sein.

Insbesondere kann die Fresnel-Struktur mehrere Fresnel-Segmente aufweisen, wobei die optisch wirksamen Facetten der Fresnel-Segmente optisch einer gedachten optischen Wirkfläche entsprechen, die gekrümmt ist und keine Spiegel- oder Rotationssymmetrie aufweist. Eine solche optische Wirkfläche wird hier als Freiformfläche bezeichnet. Die Freiformfläche kann insbesondere auch keine Translationssymmetrie aufweisen.

Eine solche optische Wirkfläche bzw. Freiformfläche kann unabhängig von ihrer räumlichen Ausdehnung zunächst rechnerisch optimiert werden, damit das dann gefertigte optische Element mit der Fresnel-Struktur die gewünschten Eigenschaften aufweist. Bei der Umsetzung der Freiformfläche als Fresnel-Struktur spielt die räumliche Ausdehnung der Freiformfläche praktisch keine Rolle, da diese durch die einzelnen Facetten optisch äquivalent bereitgestellt werden kann, so daß die oben erwähnte rechnerische Optimierung durchgeführt werden kann.

Die maximale Facetten-Höhe kann vorgegeben werden und beispielsweise im Bereich von 5 - 500 $\mu$m, insbesondere im Bereich von 0,01 - 0,1 mm liegen.

Insbesondere sind die optisch wirksamen Facetten an der Grenzfläche des Multifunktionsglases ausgebildet. Das erleichtert die Herstellung. So kann die Fresnel-Struktur beispielsweise durch Diamantfräsen hergestellt werden. Es ist jedoch auch möglich, die Fresnel-Struktur bzw. das Multifunktionsglas durch Abform- und Gußverfahren herzustellen.

Die Fresnel-Segmente können als reflektive oder als refraktive Segmente ausgebildet werden. Im Fall der reflektiven Ausbildung kann die Reflektivität eingestellt werden und in einem Bereich von größer 0 bis nahezu 100 % liegen.

Insbesondere kann bei der Fresnel-Struktur die maximale Höhe jeder Facette gleich groß sein.

Ferner kann die Facettenform eine Näherung, insbesondere eine lineare Näherung der Form des entsprechenden Flächenabschnitts der gedachten Wirkfläche sein. Damit kann immer noch eine optisch entsprechende Wirkung erreicht werden. Natürlich ist die optische Wirkung der Fresnel-Struktur in Realität nicht identisch zur optischen Wirkung der gedachten optischen Wirkfläche. Wesentlich ist erfindungsgemäß, daß die Abweichung der tatsächlichen optischen Wirkung der Fresnel-Struktur von der optimalen optischen Wirkung der gedachten optischen Wirkfläche so gering ist, daß das optische Element die gestellten optischen Anforderungen erfüllt, wie dies stets bei optischen Elementen der Fall ist, die in Realität nie die theoretisch maximale optische Wirkung erreichen.

Die Facetten können im Schnitt konkav oder auch konvex gekrümmt sein.

Ferner können die Fresnel-Segmente direkt benachbart sein. Es ist jedoch auch möglich, daß einzelne Fresnel-Segmente voneinander beabstandet sind.

Die optisch wirksame Fläche mit der Fresnel-Struktur ist insbesondere eine zusammenhängende Fläche.

Die Aufgabe wird bei dem Anzeigeverfahren der eingangs genannten Art dadurch gelöst, daß die Intensität von über den ersten Auskoppelabschnitt in das Multifunktionsglas eingekoppeltem, in diesem bis zum zweiten Auskoppelabschnitt geführtem und über den zweiten Auskoppelabschnitt aus dem Multifunktionsglas ausgekoppeltem Umgebungslicht gemessen und in Abhängigkeit der gemessenen Intensität die Helligkeit des Bildes gesteuert wird.

Damit läßt sich der gewünschte Kontrast in Abhängigkeit der Umgebungshelligkeit einstellen.

Bei dem Verfahren können der zweite Auskoppelabschnitt und der Einkoppelabschnitt derselbe Abschnitt sein.

Ferner ist es möglich, daß bei dem Verfahren zwischen dem zweiten Auskoppelabschnitt und dem Bilderzeugungsmodul ein Strahlteiler angeordnet ist, der das aus dem zweiten Auskoppelabschnitt ausgekoppelte Licht auf den Detektor lenkt.

Des weiteren kann bei dem Verfahren das Bild im Multifunktionsglas entlang eines Bildstrahlengangs geführt werden, wobei das über den ersten Auskoppelabschnitt in das Multifunktionsglas eingekoppelte Umgebungslicht den Bildstrahlengang durchläuft.

Bei dem Verfahren kann während der Intensitätsmessung die Bilderzeugung mittels dem Bilderzeugungsmodul unterbrochen werden.

Ferner ist es möglich, daß auf einer Vorderseite des Multifunktionsglases eine phototrope Schicht ausgebildet ist. Die phototrope Schicht kann als passive oder als aktive Schicht verwirklicht sein.

Bei dem Verfahren kann der erste Auskoppelabschnitt als diffraktiv wirkendes Element auf der Vorderseite oder Rückseite des Multifunktionsglases ausgebildet werden.

Ferner kann bei dem Verfahren die Intensität ortsaufgelöst gemessen und die Helligkeit im erzeugten Bild ortsaufgelöst gesteuert werden.

Vorteilhafte Ausgestaltungen des erfindungsgemäßen Verfahrens sind in den abhängigen Verfahrensansprüchen angegeben.

Insbesondere ist es möglich, die Intensität ortsaufgelöst zu messen. So kann z.B. ein Bild der wahrnehmbaren Umgebung gemessen werden. Die Steuerung der Bildhelligkeit kann in diesem Fall ebenfalls ortsaufgelöst variiert werden, so daß eine optimale Anpassung an die Helligkeit in der vorliegenden Umgebung möglich ist.

Die Fresnel-Segmente werden bevorzugt an einer Grenzfläche des Multifunktionsglases ausgebildet. Das vereinfacht die Herstellung des Multifunktionsglases.

Die Fresnel-Struktur kann basierend auf Herstellungsdaten hergestellt werden, die rechnerisch dadurch erzeugt werden, daß eine optische Modellfläche in mehrere Höhenbereiche aufgeteilt wird und die Flächenabschnitte der einzelnen Höhenbereiche oder Näherungen dieser Flächenabschnitte an einer Grundfläche (z.B. auf der oder unter der Grundfläche) rechnerisch so angeordnet werden, daß sie optisch der optischen Wirkfläche entsprechen. Die Aufteilung in die mehreren Höhenbereiche kann mit konstanter Höhe oder auch mit variierender Höhe erfolgen. Insbesondere liegt die Höhe im Bereich von 5 - 500 $\mu$m. Besonders bevorzugt ist der Bereich von 0,01 - 0,1 mm.

Die Höhenbereiche können insbesondere so gewählt werden, daß der Abstand zur Grundfläche jeweils konstant ist.

Die Flächenabschnitte bzw. die Näherung der Flächenabschnitte können rechnerisch an einer planen oder an einer gekrümmten Grundfläche angeordnet werden.

Insbesondere kann als Näherung der Flächenabschnitte eine lineare Näherung gewählt werden. Es ist jedoch auch jede andere Art der Näherung möglich.

Die Facetten können so ausgebildet werden, daß die maximale Höhe aller Facetten gleich groß ist.

Das Multifunktionsglas der Anzeigevorrichtung der vorliegenden Erfindung kann in gleicher Weise wie das Multifunktionsglas der WO 2008/089992 A1 ausgebildet sein. Ferner kann das Bilderzeugungsmodul der vorliegenden Anmeldung in gleicher Weise wie die in der WO 2008/089992 A1 beschriebenen Bilderzeugungsmodule ausgebildet werden. Der Inhalt der WO 2008/089992 A1 wird hiermit im vollem Umfang in die vorliegende Anmeldung mit aufgenommen.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1   eine schematische Ansicht einer ersten Ausführungsform der erfindungsgemäßen Anzeigevorrichtung;
Fig. 2   eine schematische Ansicht einer zweiten Ausführungsform der erfindungsgemäßen Anzeigevorrichtung;
Fig. 3   eine Draufsicht des Auskoppelabschnitts 9 des Multifunktionsglases 4 von Fig. 2;
Fig. 4   eine vergrößerte Schnittansicht entlang der Schnittlinie B-B in Fig. 3;
Fig. 5   eine vergrößerte Ansicht des Details C1 von Fig. 4;
Fig. 6   eine schematische Ansicht zur Erläuterung der Anordnung der Umlenkelemente;
Fig. 7   eine weitere schematische Ansicht zur Erläuterung der Anordnung der Umlenkelemente;
Fig. 8   eine vergrößerte Ansicht des Details C2 von Fig. 4;
Fig. 9   eine vergrößerte Ansicht des Details C2 von Fig. 4 gemäß einer ersten Abwandlung;
Fig. 10   eine vergrößerte Ansicht des Details C2 von Fig. 4 gemäß einer weiteren Abwandlung;
Fig. 11 - 13   Beispiele weiterer Profilformen für die Umlenkelemente 12;
Fig. 14   ein weiteres Beispiel für die Ausbildung der Umlenkspiegel und der sehbegrenzenden Flanken;
Fig. 15   eine perspektivische Ansicht des Einkoppelabschnittes 7;
Fig. 16   den Verlauf der optischen Wirkfläche, der mit der Fresnel-Struktur 33 gemäß Fig. 15 nachgebildet ist;
Fig. 17   eine Draufsicht auf den Einkoppelabschnitt 7 gemäß Fig. 15;
Fig. 18   einen xz-Schnitt der Wirkfläche 38;
Fig. 19   eine vergrößerte Darstellung des Details C3 von Fig. 18;
Fig. 20   eine Profilform der Fresnel-Struktur 33;
Fig. 21   eine Schnittansicht einer weiteren Wirkfläche 38, die als Fresnel-Struktur 33 auf einer gekrümmten Grundfläche 41 verwirklicht wird;
Fig. 22   eine weitere Wirkfläche 38, die wiederum auf eine gekrümmte Grundfläche 41 optisch gleichwirkend als Fresnel-Struktur umgesetzt wird;
Fig. 23 - 24   Schnittansichten einer Fresnel-Struktur an einer gekrümmten Grundfläche 41;
Fig. 25   eine Schnittansicht einer weiteren Fresnel-Struktur 33;
Fig. 26   eine Schnittansicht einer nicht zusammenhängenden Fresnel-Struktur, und
Fig. 27   eine schematische Ansicht einer weiteren Ausführungsform der erfindungsgemäßen Anzeigevorrichtung.

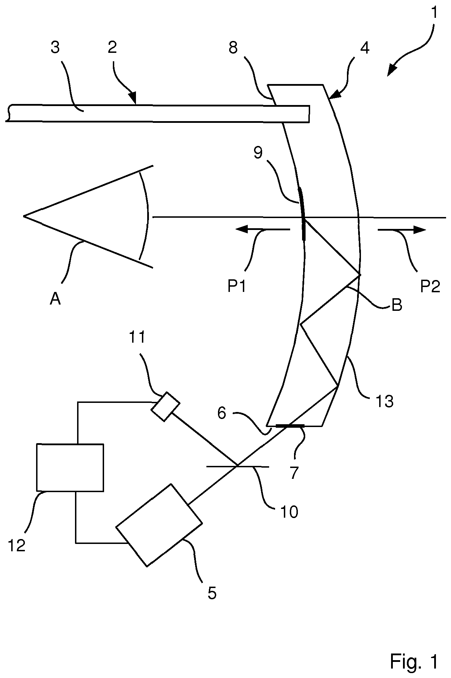

Bei der in Fig. 1 gezeigten Ausführungsform umfaßt die erfindungsgemäße Anzeigevorrichtung 1 ein auf dem Kopf eines Benutzers aufsetzbare Haltevorrichtung 2 in Form eines Brillengestells, wobei in Fig. 1 lediglich ein Seitenbügel 3 schematisch eingezeichnet ist.

An der Haltevorrichtung 2 sind zwei Multifunktionsgläser 4 für beide Augen A des Benutzers befestigt. In der Seitenansicht von Fig. 1 sind lediglich ein Multifunktionsglas 4 und ein Auge schematisch dargestellt.

Die Anzeigevorrichtung umfaßt ferner ein Bilderzeugungsmodul 5, mit dem ein Bild erzeugt wird, das dem Benutzer der Anzeigevorrichtung in Überlagerung mit der für den Benutzer durch das Multifunktionsglas 4 hindurch wahrnehmbaren Umgebung, wenn der Benutzer die Anzeigevorrichtung auf dem Kopf trägt, dargeboten werden soll. Dazu weist das Multifunktionsglas an seiner Unterseite 6 einen Einkoppelabschnitt 7 und an seiner Rückseite 8 einen Auskoppelabschnitt 9 auf. Der Auskoppelabschnitt 9 ist als diffraktives Element ausgebildet und dient dazu, das über den Einkoppelabschnitt 7 eingekoppelte Licht vom Bilderzeugungsmodul 5 in Richtung zum Auge A des Benutzers hin umzulenken, so daß der Benutzer das erzeugte Bild als virtuelles Bild in Überlagerung mit der Umgebung wahrnehmen kann. Der Einkoppelabschnitt 7 kann, muß aber nicht, als diffraktives Element ausgebildet sein. Im Multifunktionsglas 4 wird das Licht entlang eines Bildstrahlenganges B aufgrund von drei inneren Totalreflexionen bis zum Auskoppelabschnitt 9 geführt.

Der Auskoppelabschnitt ist so ausgebildet, daß die -1. Beugungsordnung in Richtung des Pfeils P1 und die +1. Beugungsordnung in Richtung des Pfeils P2 verläuft, wobei der Auskoppelabschnitt 9 bevorzugt dahingehend optimiert ist, daß mehr Licht in die -1. Beugungsordnung als in die +1. Beugungsordnung gebeugt wird. Nachdem der Auskoppelabschnitt 9 in Richtung der 0. Beugungsordnung (also für Strahlung in Richtung gemäß Pfeil P1 bzw. Pfeil P2) transmissiv ist, kann der Benutzer die Umgebung in Überlagerung mit dem von dem Bilderzeugungsmodul 5 erzeugten Bild wahrnehmen.

Von dem von der Umgebung kommenden Licht wird jedoch am Auskoppelabschnitt 9 aufgrund der +1. Beugungsordnung ein gewisser Anteil in den Bildstrahlengang B eingekoppelt, der in entgegengesetzter Richtung zum Licht des Bilderzeugungsmoduls in dem Multifunktionsglas 4 bis zum Einkoppelabschnitt 7 geführt und das Multifunktionsglas 4 über den Einkoppelabschnitt 7 verläßt. Zwischen dem Einkoppelabschnitt 7 und dem Bilderzeugungsmodul 5 ist ein Strahlteiler 10 angeordnet, der einen Teil des vom Auskoppelabschnitt 9 und somit des von der Umgebung kommenden Lichtes auf einen Detektor 11 lenkt.

Der Detektor 11 mißt die Intensität des auf ihn fallenden Lichtes und gibt ein entsprechendes Meßsignal an eine Steuereinheit 12 der Anzeigevorrichtung 1 aus. Die Steuereinheit 12 ist mit dem Bilderzeugungsmodul 5 verbunden und steuert das Bilderzeugungsmodul 5 in Abhängigkeit des Meßsignals des Detektors 11 so an, daß der Benutzer das von dem Bilderzeugungsmodul 5 erzeugte Bild mit einer gewissen Helligkeit relativ zur Helligkeit der Umgebung im überlagerten Zustand wahrnehmen kann. So kann beispielsweise die Helligkeit des mittels zum Bilderzeugungsmodul 5 erzeugten Bildes mit zunehmender Umgebungshelligkeit erhöht werden. Natürlich ist es beispielsweise auch möglich, die mittels des Detektors 11 gemessene Intensität dahingehend zu berücksichtigen, daß ein vorbestimmtes Kontrastverhältnis zwischen dem durch das Bilderzeugungsmodul 5 erzeugten Bild und der Umgebung vorliegt.

Bei der Steuerung oder Regelung der Anzeigevorrichtung 1 können die lichttechnischen Eingangsgrößen wie folgt berücksichtigt werden.

Die Umfeldstrahldichte $L'_e(\lambda)_{Umfeld}$ der durch das Multifunktionsglas 4 wahrnehmbaren Umgebung auf der Rückseite (also zwischen Multifunktionsglas 4 und Auge A) beträgt bei einem Glastransmissionsgrad $\tau(\lambda)_1$ durch das Multifunktionsglas 4 (in Fig. 1 von rechts nach links in Richtung des Pfeils P1)

$$L'_e\left(\lambda\right)_{Umfeld} = L_e\left(\lambda\right)_{Umfeld}\left(\lambda\right) * \tau(\lambda)_1 \tag{1}$$

wobei $L_e(\lambda)_{Umfeld}$ die auf das Multifunktionsglas 4 treffende Umfeldstrahldichte ist. Die Umfeldleuchtdichte , $L'_{Umfeld}$ die das Auge A hinter dem Multifunktionsglas sieht, beträgt

$$L'_{Umfeld} = \int_{\lambda} L'_e\left(\lambda\right)_{Umfeld}\left(\lambda\right) * v(\lambda) * d\lambda \tag{2}$$

Die Strahldichte, welche der Lichtsensor bzw. Detektor 11 sieht, berechnet sich folgendermaßen:

$$L''_e\left(\lambda\right)_{Umfeld} = L_e\left(\lambda\right)_{Umfeld}\left(\lambda\right) * \prod_{Anzahl} \eta_1 * \tau(\lambda)_2 * \tau(\lambda)_3 \tag{3}$$

wobei $n_1$ die Beugungseffizienz $\left(\eta_1 = \dfrac{Intensität_{Gebeugter\_Strahl}}{Intensität_{Einfallender\_Strahl}}\right)$ des Auskoppelabschnittes 9, $\tau(\lambda)_2$ der Glastransmissionsgrad entlang des Bildstrahlenganges B und $\tau(\lambda)_3$ der Transmissionsgrad vom Einkoppelabschnitt 7 bis zum Detektor 10 ist.

Die Strahldichte des vom Bilderzeugungsmoduls 5 erzeugten Bildes nach der Auskoppelung durch den Auskoppelabschnitt 9 am Ausgang zum Auge beträgt

$$L'_e\left(\lambda\right)_{Bild} = L_e\left(\lambda\right)_{Bild} * \prod_{Anzahl} \eta_2 * \tau(\lambda)_4 \ , \tag{4}$$

wobei $\eta_2$ die Beugungseffizienz $\left(\eta_2 = \dfrac{Intensität_{Gebeugter\_Strahl}}{Intensität_{Einfallender\_Strahl}}\right)$, $\tau(\lambda)_4$ die Glastransmission entlang des glasinternen Lichtweges vom Bilderzeugungsmodul 5 bis zum Auskoppelabschnitt und $L_e(\lambda)_{Bild}$ die Strahldichte des Bildes am Ausgang des Bilderzeugungsmoduls 5 (also vor dem Strahlteiler 10) ist. Die Leuchtdichte $L'_{Bild}$ des Bildes am Ausgang zum Auge A beträgt dann

$$L'_{Bild} = \int_{\lambda} L'_e\left(\lambda\right)_{Bild}\left(\lambda\right) * v(\lambda) * d\lambda \tag{5}$$

Bei der Lichtregelung wird daher die Korrelation zwischen den Kenngrößen $L''_e(\lambda)_{Umfeld}$ des Detektors 11, der wahrgenommenen Umfeldleuchtdichte $L'_{Umfeld}$ sowie der wahrgenommenen Leuchtdichte des Bildes $L'_{Bild}$ berücksichtigt. Man kann $L_e(\lambda)_{Bild}$ z.B. als $a(L_e(\lambda)_{Umfeld})^b$ + Offset darstellen. Der Regelalgorithmus kann beispielsweise von folgender Funktion ausgehen:

$$L_e(\lambda)_{Bild} = (\, 42 + Offset\,) * L_e(\lambda)_{Umfeld}^{0,512} \tag{6}$$

Die Messung der Umgebungshelligkeit kann laufend oder auch in vorbestimmten Abständen durchgeführt werden. Vorteilhaft ist es, wenn während der Messung mit dem Detektor 11 das Bilderzeugungsmodul 5 kurzzeitig ausgeschaltet wird, um unerwünschtes Streulicht vom Bilderzeugungsmodul 5, das die Messung verfälschen könnte, zu vermeiden. Dieses zeitweise Ausschalten des Bilderzeugungsmoduls 5 kann von so kurzer Zeitdauer sein, daß ein Benutzer dies während der Benutzung der Anzeigevorrichtung 1 nicht wahrnehmen kann.

Der Auskoppelabschnitt 9 kann nicht nur als diffraktiver Auskoppelabschnitt sondern auch als refraktiver Auskoppelabschnitt ausgekoppelt ausgebildet sein. In diesem Fall wird er bevorzugt als Fresnel-Struktur ausgebildet.

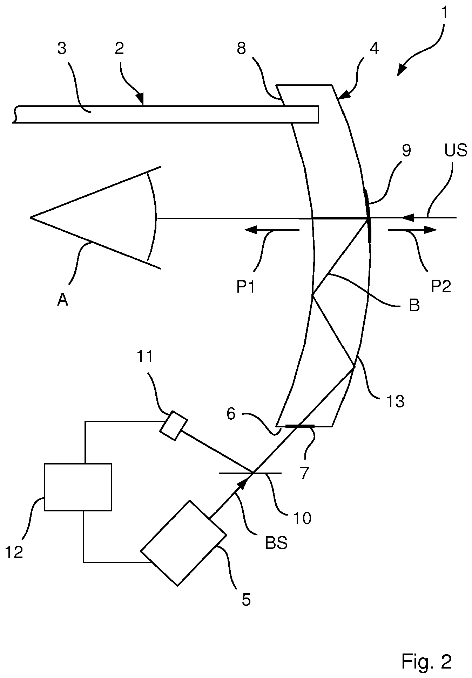

Gemäß einer alternative Ausbildung, die in Fig. 2 dargestellt ist, kann der Auskoppelabschnitt 9 auch auf der Vorderseite 13 des Multifunktionsglases 4 ausgebildet sein. In diesem Fall verläßt das Licht vom Bilderzeugungsmodul 5 nach Reflexion am Auskoppelabschnitt 9 nicht sofort das Multifunktionsglas 4, sondern durchläuft es in Richtung des Pfeils P1 und verläßt es dann auf der Rückseite 8.

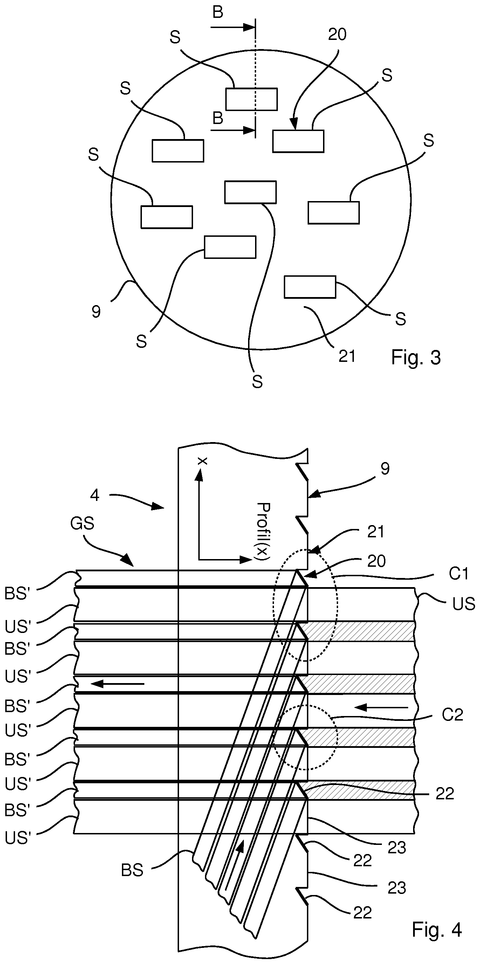

Der Auskoppelabschnitt 9 kann auch als Überlagerungsbereich 9 bezeichnet werden, da er eine Überlagerung des von der Umgebung kommenden Lichtes, in Fig. 2 durch den Pfeil US dargestellt, mit dem über den Einkoppelabschnitt 7 eingekoppelten Lichtes BS des Bilderzeugungsmoduls 5 bewirkt. Wie insbesondere der Draufsicht in Fig. 3 entnommen werden kann, ist der Überlagerungsbereich im wesentlichen kreisförmig ausgebildet und in einen ersten Abschnitt 20 und einen zweiten Abschnitt 21 aufgeteilt, wobei der erste Abschnitt 20 zur Umlenkung des vom Bilderzeugungsmoduls 5 kommenden Bildstrahlenbündels BS und der zweite Abschnitt 21 zur Transmission des von der Umgebung kommenden Umgebungsstrahlenbündels US dient. Der Überlagerungsbereich 9 weist eine Vielzahl von voneinander beabstandeten Unterabschnitten S auf, die bei der hier beschriebenen Ausführungsform zufällig im Überlagerungsbereich 9 verteilt sind.

Wie aus der vergrößerten Schnittdarstellung (Fig. 4) entlang der Linie B-B eines der Unterabschnitte S in Fig. 3 ersichtlich ist, weist jeder Unterabschnitt S eine Vielzahl von voneinander beabstandeten Umlenkspiegeln 22 auf, die sich hier senkrecht zur Zeichenebene von Fig. 4 erstrecken.

Die Bereiche zwischen den Umlenkspiegeln 22 in den Unterabschnitten S sowie die restlichen Bereiche des Überlagerungsbereiches 9 neben den Unterabschnitten S bilden zusammen den zweiten Abschnitt 21. Der erste Abschnitt 20 wird von den Umlenkspiegeln 22 gebildet.

Wie Fig. 4 ferner entnommen werden kann, sind der Überlagerungsbereich 9 und somit auch die Umlenkspiegel 22 auf der Vorderseite 13 des Multifunktionsglases 4 ausgebildet. Die Vorderseite 13 ist zwar gekrümmt; in der Figur 4 ist zur Vereinfachung der Darstellung die Krümmung jedoch nicht gezeigt. Die Umlenkspiegel 22 sind gegenüber der Normalen der Vorderseite 13 so gekippt, daß der Teil des Bildstrahlenbündels BS, der auf den jeweiligen Umlenkspiegel 12 trifft, zum Auge A hin als Bildteilstrahl BS' umgelenkt wird. Der restliche Teil des Bildstrahlenbündels BS, der nicht auf die Umlenkspiegel 12 trifft, wird an der Vorderseite 8 so reflektiert und/oder transmittiert, daß er für den Benutzer nicht wahrnehmbar ist.

Der Teil des Umgebungsstrahlenbündels US, der (in Fig. 4 von rechts) auf die Rückseiten der Umlenkspiegel 22 trifft, wird von den Umlenkspiegeln 22 so abgeschattet, daß der Benutzer diesen Teil nicht wahrnehmen kann. Daher ist dieser Teil in Fig. 4 schraffiert eingezeichnet. Der restliche Teil des Umgebungsstrahlenbündels US tritt als Umgebungsteilstrahlen US' durch die transmissiven Bereiche 23 zwischen bzw. neben den Umlenkspiegeln 22 hindurch.

Der Überlagerungsbereich 9 bewirkt somit eine Überlagerung des durch die transmissiven Bereiche 23, die den zweiten Abschnitt 21 bilden, hindurchtretenden Teils US' des Umgebungsstrahlenbündels US mit dem an den Umlenkspiegeln 22 reflektierten Teil BS' des Bildstrahlenbündels BS zu einem gemeinsamen Strahlenbündel GS. Dadurch kann der die Anzeigevorrichtung 1 auf dem Kopf tragender Benutzer das mittels des Bilderzeugungsmoduls 5 erzeugte Bild in Überlagerung mit der Umgebung wahrnehmen.

In der schematischen Darstellung von Fig. 4 verlaufen die Strahlen BS' und US' parallel zueinander. Das muß aber nicht so sein. So findet z.B. aufgrund der Krümmung der Vorderseite eine "Durchmischung" der Strahlen BS' und US' statt.

Der so ausgebildete Überlagerungsbereich 9 weist den Vorteil auf, daß er im Vergleich zu diffraktiven Lösungen sehr breitbandig ist.

Ferner weist der Überlagerungsbereich noch ein oder mehrere, nicht eingezeichnete Umlenkelemente auf, die dafür sorgen, daß ein geringer Teil des Umgebungsstrahlenbündels US in den Bildstrahlengang B eingekoppelt wird und somit in gleicher Art und Weise wie bei der Ausführungsform von Fig. 1 in entgegengesetzter Richtung zum Bildstrahlenbündel BS das Multifunktionsglas 4 bis zum Einkoppelabschnitt 7 verläuft, über diesen aus dem Multifunktionsglas 4 austritt und mittels dem Strahlteiler 10 auf den Detektor 11 trifft.

Die einzelnen Umlenkspiegel 22 sind bevorzugt ungleichmäßig über den Überlagerungsbereich 9 verteilt angeordnet, wie dies hier aufgrund der im Überlagerungsbereich 9 zufällig verteilten Unterabschnitten S der Fall ist.

Natürlich kann z.B. auch der Abstand zwischen benachbarten Umlenkspiegeln 22 variieren. Es ist auch jede andere Verteilung der Umlenkspiegel 22 im Überlagerungsbereich 9 möglich. Der Flächenanteil der Umlenkspiegel 22 relativ zur gesamten Fläche des Überlagerungsbereiches 9, in Draufsicht auf den Überlagerungsbereich 9 gesehen, kann z. B. im Bereich von 5 - 30 % liegen.

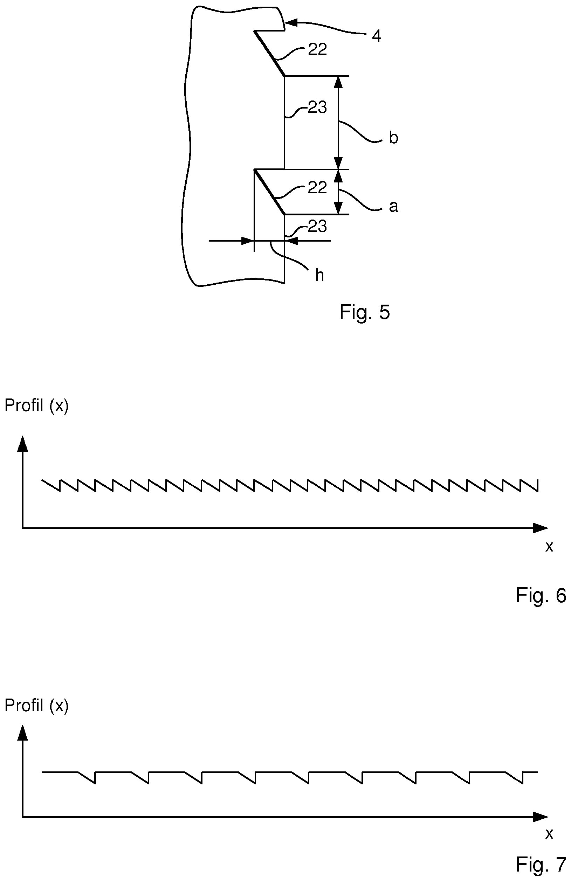

Natürlich ist es auch möglich, daß im gesamten Überlagerungsbereich Umlenkspiegel 22 vorgesehen sind. In diesem Fall kann der oben angegebene Flächenanteil dadurch erreicht werden, daß das Verhältnis b/a im Bereich von 3:1 bis 20:1 liegt (Fig. 5, die das Detail C1 von Fig. 4 vergrößert zeigt). Die Höhe h liegt bei allen beschriebenen Ausführungsformen bevorzugt im Bereich von 5 - 500 μm, insbesondere im Bereich von 0,01 - 0,1 mm. Für den Parameter a hat sich eine Größe von vorzugsweise 20 - 30 μm als sehr vorteilhaft erwiesen.

Der erste Abschnitt 20 in Fig. 3 kann wegen der verteilt angeordneten Umlenkspiegel 22 aufgrund der verteilten Unterabschnitte auch als eine nicht zusammenhängende Fresnel-Struktur bezeichnet werden. Diese Fresnel-Struktur kann wie folgt ermittelt werden. Zunächst geht man von der nachfolgend angegebenen allgemeinen Flächen-Funktion $f(x,y)$ aus.

$$f\left(x,y\right)=\sum_{i=0}^{N}\sum_{j=0}^{N}\left(c_{i,j}x^{i}y^{j}\right) \qquad (7)$$

Die Flächen-Funktion $f(x,y)$ kann insbesondere eine gekrümmte Fläche beschreiben. Die gekrümmte Fläche kann rotationssymmetrisch ausgebildet sein. Beispielsweise kann die Flächen-Funktion eine Rotationsasphäre beschreiben. Es ist jedoch auch möglich, daß sie eine Fläche beschreibt, die gekrümmt ist und keine Spiegel- und Rotationssymmetrie aufweist. Eine solche Fläche kann auch als Freiformfläche bezeichnet werden. Die Freiformfläche kann bevorzugt keine Translationssymmetrie aufweisen.

Durch Vorgeben einer maximalen Furchentiefe h (hier z.B. zwischen 0,01 und 0,1 mm) kann als Profilhöhe unter Berücksichtigung der Höhe $z(x,y)$ der Vorderseite 8 des Multifunktionsglas 4 folgende reale Profil-Funktion abgeleitet werden.

$$\text{profil} = z(x,y) - \text{modulo}(f(x,y),h) \qquad (8)$$

Hierbei beschreibt modulo($f(x,y),h$) den jeweiligen Fresnel-Anteil, der von 0 bis h ansteigt und dann wieder durch einen Sprung auf 0 abfällt. Somit beschreibt modulo($f(x,y),h$) eine Dreiecksfunktion für ein rechtwinkliges Dreieck. Man erhält dadurch folgende durchgehende Profil-Funktion, wie sie in Fig. 6 schematisch gezeigt ist.

Je nach gewünschtem Flächenverhältnis von Umlenkspiegeln 22 zum gesamten Überlagerungsbereich und der Größe und Anzahl der Unterabschnitte S werden Bereiche bzw. Abschnitte dieser Profil-Funktion durch den sphärischen Radius der Vorderseite 8 des Multifunktionsglases 4 ausgetauscht, so daß sich die nachfolgend in Fig. 7 gezeigte Fresnel-Struktur ergibt. Aufgrund der schematischen Darstellung eines nur geringen Ausschnittes der Vorderseite 8 ist in dieser Darstellung die sphärische Krümmung der Vorderseite nicht erkennbar.

Bei dem hier beschriebenen Ausführungsbeispiel wurden folgende Polynom-Koeffizienten verwendet, wobei die erste Ziffer bei dem Koeffizienten c jeweils für die x-Potenz und die zweite Ziffer für die y-Potenz steht, so daß z.B. c21 der Koeffizient vor xxy ist. Alle nicht aufgeführten Koeffizienten c sind 0.

| | |
|---|---|
| c10 | 3,09E-02 |
| c01 | -5,69E-01 |
| c11 | -1,00E-04 |
| c21 | 2,71E-05 |
| c12 | 1,34E-05 |
| c22 | 2,57E-06 |
| c20 | 3,17E-03 |
| c02 | 2,44E-03 |
| c30 | 2,64E-05 |
| c03 | 2,23E-05 |

Der Multifunktionsglasradius, auf dem die Fresnel-Struktur aufgebracht ist, beträgt hier 105,08 mm.

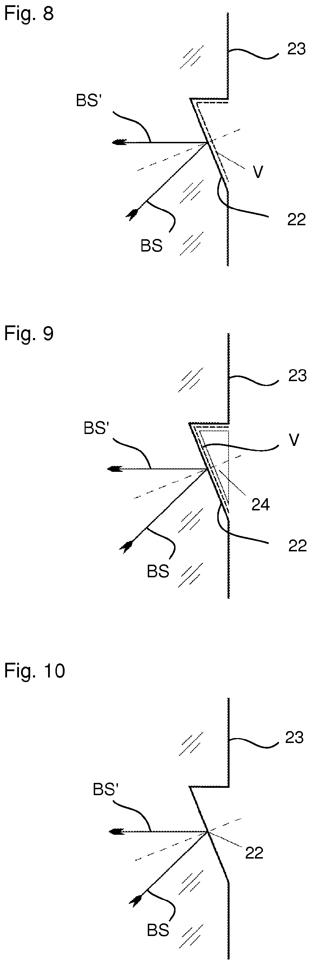

Bei der beschriebenen Ausführungsform sind die Umlenkspiegel 22 durch eine Verspiegelung V der geneigten Abschnitte gebildet, wie dies in der vergrößerten Ansicht des Details C2 von Fig. 4 in Fig. 8 ersichtlich ist.

In Fig. 9 ist eine Abwandlung gezeigt, bei der der freie Bereich, der aufgrund der Neigung des Umlenkspiegels 22 relativ zur Vorderseite und somit zu den transmissiven Bereichen 23 des Multifunktionsglases 4 gebildet ist, mit Material 24 bis zur Vorderseite aufgefüllt ist. Die Auffüllung ist bevorzugt so durchgeführt, daß eine glatte, durchgehende Vorderseite gebildet ist. Als Material 24 kann insbesondere das gleiche Material wie für das Multifunktionsglas 4 selbst verwendet werden.

Es ist jedoch auch möglich, den Überlagerungsbereich 9 so auszulegen, daß die Umlenkung des Bildstrahlenbündels BS durch innere Totalreflexion erfolgt, so daß eine Verspiegelung nicht mehr notwendig ist, wie in Fig. 10 gezeigt ist. In diesem Fall wird das Umgebungsstrahlenbündel US auch von den Umlenkelementen 22 transmittiert.

Natürlich ist es auch möglich, die Umlenkelemente 22 mit einer Teilverspiegelung zu versehen, so daß sie sowohl reflektiv für das Bildstrahlenbündel BS als auch transmissiv für das Umgebungsstrahlenbündel US wirken.

Ferner ist es möglich, statt reflektiven Umlenkelementen refraktive Umlenkelemente auszubilden. In diesem Fall wird der Überlagerungsbereich 9 bevorzugt auf der Innenseite 18 des Multifunktionsglas 4 ausgebildet, wie in Fig. 1 gezeigt ist.

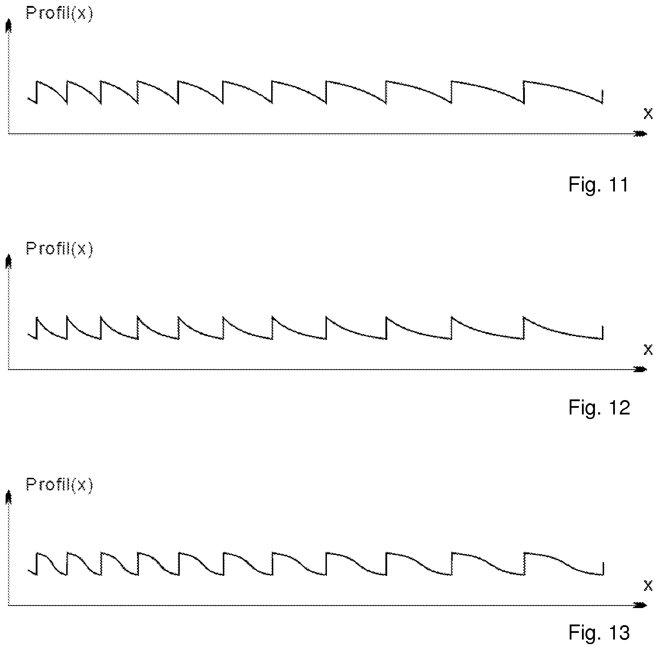

Bei den bisher beschriebenen Ausführungsformen war die Profilform der Umlenkelemente 22 in den gezeigten Schnittdarstellungen stets linear. Es sind jedoch auch andere Profilformen möglich. So können die Flanken im Schnitt konvex gekrümmt sein, wie in Fig. 11 angedeutet ist. Die Darstellung in Fig. 11 wie auch in den Fig. 12 und 13 entspricht der Darstellung von Fig. 6, so daß ausgehend von dieser Profilform noch bereichsweise der sphärische Radius anstatt des gezeigten Profilverlaufs vorzusehen ist, um dann zu dem gewünschten Profilverlauf in den Unterabschnitten S zu kommen. Auch eine konkave Flankenkrümmung, wie sie in Fig. 12 angedeutet ist, kann vorgesehen sein.

Ferner kann eine beliebige Krümmung vorgesehen werden, wie schematisch in Fig. 13 angedeutet ist.

In einer (nicht gezeigten) Abwandlung des Multifunktionsglases 4 kann die Strahlengangfaltung des Lichtes vom Bilderzeugungsmodul 5 im Multifunktionsglas 4 zwischen dem Einkoppelabschnitt 7 und dem Überlagerungsbereich 9 durch eine oder mehrere Fresnel-Flächen in Art des Überlagerungsbereiches 9 bewirkt werden.

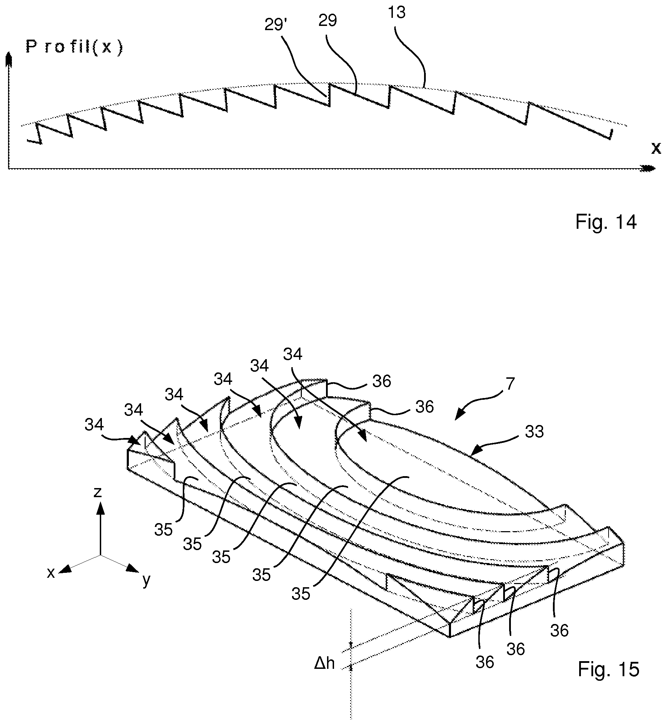

In Fig. 14 ist ein weiteres Profil gezeigt, das sich im wesentlichen von den bisher beschriebenen Profilen darin unterscheidet, daß die Flanken 29', die die Umlenkspiegel 29 verbinden, im Schnitt nicht mehr zueinander parallel orientiert sind, sondern radial zum nicht gezeigten Mittelpunkt der Vorderseite 13.

Der Einkoppelabschnitt 7 kann als Fresnel-Fläche (Fresnel-Struktur 33 mit mehreren Fresnel-Segmenten 34) ausgebildet sein, die eine optisch abbildende Eigenschaft aufweist. Eine vergrößerte Teilansicht eines solchen Einkoppelabschnittes 7 ist in Fig. 15 gezeigt, wobei zur Vereinfachung der Darstellung der Einkoppelabschnitt 7 um 180° gedreht im Vergleich zu Fig. 1 und 2 gezeigt ist. Das Licht vom Bilderzeugungsmodul 5 trifft somit von oben auf den Einkoppelabschnitt 7.

Jedes Fresnel-Segment 34 weist eine optisch wirksame Facette 35 auf. Um die in Fig. 1 gezeigte Stufenform zu erzielen, umfaßt in der Regel jedes Fesnel-Segment 34 noch eine Flanke 36, die sich hier im wesentlichen senkrecht zur Unterseite 6 erstreckt.

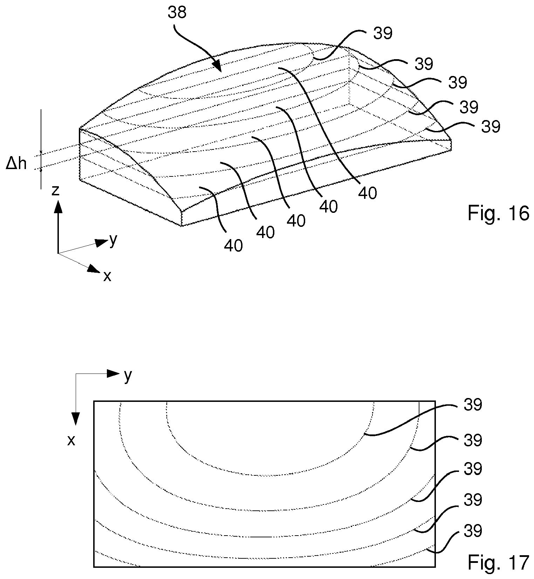

Die gemeinsame optische Wirkung der Facetten 35 entspricht einer gedachten optischen Wirkfläche 38, wie sie in Fig. 16 gezeigt ist, wobei die optische Wirkfläche 38 gekrümmt ist und bevorzugt keine Spiegel- oder Rotationssymmetrie aufweist. Wie aus dem Vergleich der Figuren 15 und 16 leicht ersichtlich ist, ist die Darstellung in Fig. 16 um 90° um die z-Achse gegenüber der Darstellung in Fig. 15 gedreht. Die gedachte optische Wirkfläche 38 kann wie folgt als Fresnel-Struktur 33 gemäß Fig. 15 umgesetzt werden.

Die Wirkfläche 38 wird in z-Richtung in Abschnitte gleicher Höhe $\Delta h$ geteilt. Dadurch ergeben sich Schnittlinien 39, die auch als Höhenlinien bezeichnet werden können und die jeweils einen Flächenabschnitt 40 der Wirkfläche 38 begrenzen. Die Flächenabschnitte 40 werden in z-Richtung alle so zueinander verschoben, daß jeweils die untere Schnittlinie (die mit dem geringeren z-Wert) und somit der untere Rand der Facette 35 auf gleicher Höhe (in z-Richtung) liegen. Von der jeweiligen oberen Schnittlinie der Flächenabschnitte 40 und somit dem oberen Rand der Facette 35 wird dann die senkrechte Flanke 36 bis zur unteren Schnittlinie des direkt benachbarten Flächenabschnittes 40 geführt, um zu der gestuften Ausbildung der Fresnel-Struktur 33 gemäß Fig. 15 zu gelangen. In der Draufsicht in Fig. 17 des optischen Elementes 1 von Fig. 15 sind die oberen Ränder zu sehen.

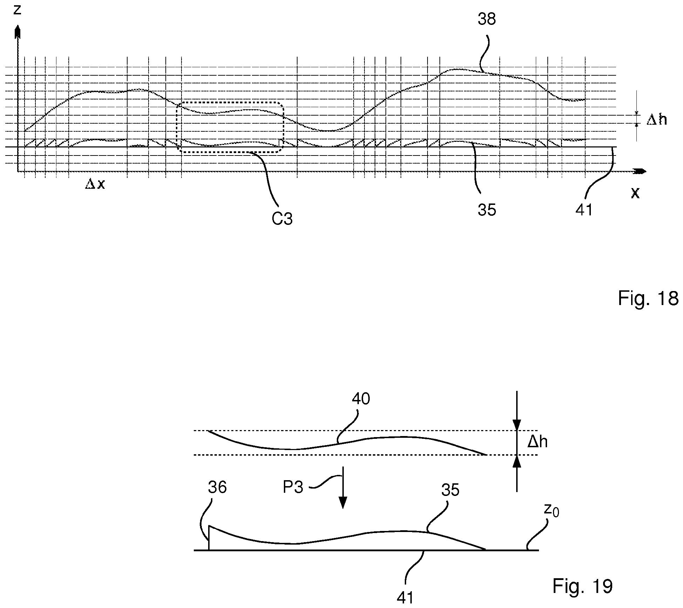

Die durchzuführenden Schritte, um von der gedachten optischen Wirkfläche 38, die gekrümmt ist und bevorzugt keine Spiegel- oder Rotationssymmetrie aufweist, zu der gewünschten Fresnel-Struktur 33 zu gelangen, werden nachfolgend in Verbindung mit Fig. 18 im Detail erläutert, in der ein xz-Schnitt der Wirkfläche 38 gezeigt ist, die verschieden ist zur Wirkfläche 38 von Fig. 16, aber wiederum gekrümmt ist und keine Spiegel- oder Rotationssymmetrie aufweist. Die Aufteilung in Flächenabschnitte 40 (in der Schnittdarstellung von Fig. 18 sind diese Flächenabschnitte natürlich Linienabschnitte) gleicher Höhe ist durch die gestrichelten Schnittlinien in Fig. 18 dargestellt.

In der vergrößerten Darstellung des Details C3 aus Fig. 18 in Fig. 19 ist ersichtlich, daß der gezeigte Flächenabschnitt 40 aufgrund des vorgegebenen Abstandes $\Delta h$ eindeutig definiert und dann auf die Höhe $z_0$ abgesenkt wird,

wie durch den Pfeil P3 schematisch dargestellt ist. Ferner wird noch auf der linken Seite des Flächenelementes bzw. der Facette 35 die Flanke 36 hinzugefügt, die sich senkrecht zur Höhe $z_0$ erstreckt. Somit ist auf einer ebenen Grundfläche 41 auf Höhe $z_0$ die Fresnel-Struktur 33 ausgebildet ist.

Für die Fresnel-Struktur 33 läßt sich somit die nachfolgende Formel 1 aufstellen, wobei $z_F$ die Fresnel-Struktur 33, $z_{Grundfläche}$ die Flächenform der Grundfläche 41 (hier eine Ebene), auf der die Fresnel-Struktur aufgebracht ist, und $z_{Facette}$ die Fresnel-Facetten 35 relativ zur Grundfläche 41 beschreibt:

$$z_F = z_{Grundfläche} + z_{Facette} \tag{9}$$

Die Fläche $z_{Facette}$ der Facetten, die auch als "gefresnelte" Freiformfläche bezeichnet werden kann, berechnet sich nach der folgenden Formel 10

$$z_{Facette} = \text{modulo}(z_{Wirkfläche}, \Delta h) \tag{10}$$

wobei die Wirkfläche 38 durch die nachfolgende Flächenformel $z_{Wirkfläche}$ beschrieben ist

$$z_{Wirkfläche}(x, y) = K1 + K2 + b_{10}x + b_{01}y + b_{11}xy + b_{21}x^2 y + b_{12}xy^2 + \sum_{\substack{i=2 \\ j=2}}^{\substack{N \\ M}} b_{ij} x^i y^j \tag{11}$$

bei der K1 den konischen Term in x-Richtung und K2 den konischen Term in y-Richtung, wie nachfolgend angegeben ist, bezeichnen

$$K1 = \frac{C_x x^2}{1 + \sqrt{1 - (1 + k_x)c^2 x^2}} \tag{12}$$

$$K2 = \frac{C_y y^2}{1 + \sqrt{1 - (1 + k_y)c^2 y^2}} \tag{13}$$

Durch die Anwendung der Modulo-Funktion auf die Wirkfläche 38 wird die Wirkfläche 38 in z-Richtung in Abständen mit gleicher Höhe $\Delta h$ geteilt. Somit ist die maximale Höhe der Facetten 35 jeweils $\Delta h$. Die verwendete Modulo-Funktion ist nachfolgend angegeben

$$\text{modulo}(a, m) = a - \left\lfloor \frac{a}{m} \right\rfloor \cdot m \tag{14}$$

wobei die Gaußklammer $\left\lfloor \dfrac{a}{m} \right\rfloor$ die größte ganze Zahl bezeichnet, die kleiner oder gleich der Zahl in der Gaußklammer ist, also das Ergebnis der Division a/m ohne den Rest der Division. Damit ergibt sich für die Facettenflächen die nachfolgende Formel

$$z_{Facette} = \text{modulo}(z_{Wirkfläche}, h) = z_{Wirkfläche} - \left\lfloor \frac{z_{Wirkfläche}}{\Delta h} \right\rfloor \cdot \Delta h \tag{15}$$

Gemäß dem oben beschriebenen Vorgehen kann basierend auf einer gewünschten optischen Wirkfläche 38, die gekrümmt ist und bevorzugt keine Spiegel- oder Rotationssymmetrie aufweist, die entsprechende Fresnel-Struktur 38 abgeleitet werden, die die entsprechende optische Wirkung bereitstellt. Aufgrund der Stufenform kann zwar mit der Fresnel-Struktur 33 nicht dieselbe optische Wirkung erreicht werden, die ein optisches Element hätte, deren Grenzfläche gemäß der Wirkfläche 38 ausgebildet ist, jedoch wird eine vergleichbare optische Wirkung erreicht.

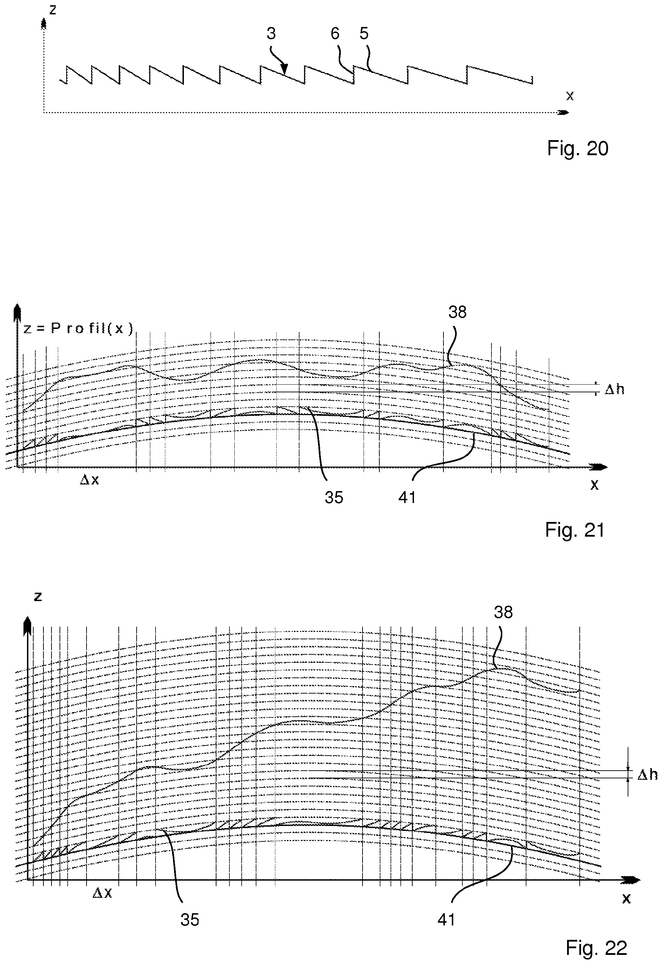

Wie der Darstellung in Figuren 18 und 19 zu entnehmen ist, weisen die Facetten 35 die durch die Wirkfläche 38 im Höhenbereich Δh vorgegebenen Krümmungen auf. Um die Herstellung der Fresnel-Struktur 33 zu vereinfachen, ist es möglich, den Verlauf der einzelnen Facetten 35 an die entsprechende Flächenform der Wirkflächen 38 anzunähern. Im einfachsten Falle kann der Verlauf linearisiert werden, wie in der Schnittansicht von Fig. 20 schematisch dargestellt ist. Es ist jedoch auch möglich, die Facetten mit einer konvexen Krümmung (Fig. 11) oder einer konkaven Krümmung (Fig. 12) zu versehen. Auch eine Näherung durch einen anderen Krümmungsverlauf ist möglich, wie dies beispielsweise in Fig. 13 angedeutet ist.

Mit diesem erfindungsgemäßen Vorgehen, eine beliebig gekrümmte Wirkfläche 38 auf einer planen Fläche als Fresnel-Struktur ausbilden zu können, ist beispielsweise ein bauraumoptimiertes Design möglich.

Bei den bisher beschriebenen Ausführungsbeispielen der Fresnel-Fläche für den Einkoppelabschnitt 7 wurde als Grundfläche jeweils eine plane Fläche bzw. eine Ebene angenommen. Natürlich ist es auch möglich, eine davon abweichende Grundfläche vorzusehen, wenn z.B. die Fresnel-Struktur 33 auf einer sphärisch gekrümmten Oberfläche ausgebildet werden soll. In diesem Fall kann mittels der Fresnel-Struktur 33 quasi ein Feintuning in der Art durchgeführt werden, daß z.B. weitere Aberrationen der sphärischen Oberfläche oder sonstige Abbildungsfehler des Multifunktionsglases 4 korrigiert werden.

Wie in Fig. 21 gezeigt, wird die Wirkfläche 38 in Abständen gleicher Höhe Δh aufgeteilt, wobei hier die Höhe jeweils relativ zur lokalen Flächennormalen der Grundfläche 41 betrachtet wird. Der Abstand der eingezeichneten Schnittlinien ist somit jeweils zur Grundfläche 41 konstant.

In Fig. 22 ist ein Beispiel gezeigt, bei der die Wirkfläche 38 gegenüber der sphärischen Grundfläche 41 stark gekippt ist. Auch in diesem Fall ist es keine Problem, die Wirkfläche 38 als Fresnel-Struktur 33 auf der Grundfläche 41 auszubilden, ohne daß die makroskopische Form der Grundfläche 41 verändert werden muß. Die Höhe Δh kann hier wie auch bei allen anderen Ausführungsformen im Bereich von 5 - 500 μm, insbesondere im Bereich von 0,01 - 0,1 mm liegen. Ferner muß die Höhe Δh nicht konstant sein, sondern kann hier wie auch bei allen anderen Ausführungsformen variieren. So kann z.B. Δh mit zunehmendem z-Wert selbst zu- oder abnehmen.

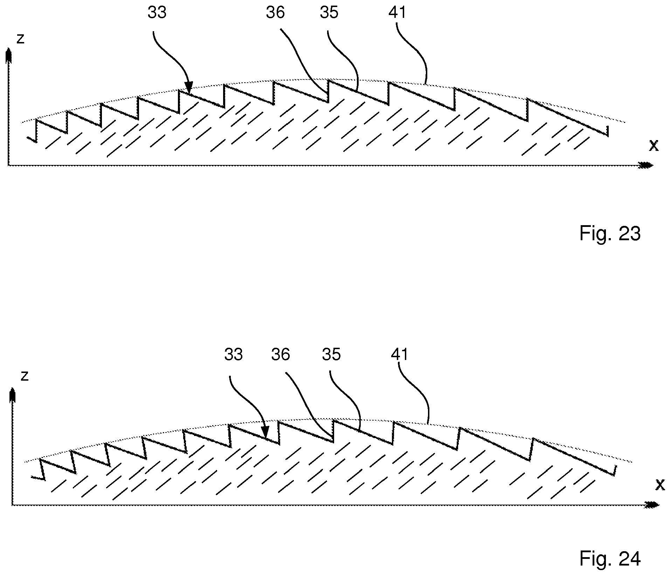

In Fig. 23 ist eine Schnittansicht einer Fresnel-Struktur 33 an einer gekrümmten Grundfläche 41 gezeigt, bei der die Facetten 35 jeweils linear ausgebildet sind. Die einzelnen Flanken 36 sind zueinander parallel ausgerichtet, wobei der ursprüngliche Verlauf der Grundfläche 41 noch schematisch eingezeichnet ist. Bei dieser Ausführungsform wurde in Abwandlung von Formel 9 die Facettenfunktion $z_{Facette}$ von der Grundflächenfunktion $z_{Grundfläche}$ abgezogen, so daß die Fresnel-Struktur 33 wie folgt beschreibbar ist:

$$z_F = z_{Grundfläche} - z_{Facette} \tag{16}.$$

Diese Art der Berechnung von $z_F$ ist natürlich auch bei allen bereits beschriebenen Ausführungsformen sowie bei allen noch nachfolgenden Ausführungsformen möglich.

In Fig. 24 ist eine Abwandlung des Profils von Fig. 23 gezeigt, das sich im wesentlichen darin unterscheidet, daß die Flanken 36 im Schnitt nicht mehr zueinander parallel orientiert sind, sondern radial zum nicht gezeigten Mittelpunkt der Grundfläche 41.

Die beschriebene Fresnel-Struktur 33 kann zur Strahlengangfaltung des Lichtes vom Bilderzeugungsmodul 5 im Multifunktionsglas 4 zwischen dem Einkoppel- und Auskoppelabschnitt 7, 9 auf der Vorder- und/oder Rückseite 13, 8 des Multifunktionsglases 4 vorgesehen sein, wobei in diesem Fall die Facetten 35 bevorzugt verspiegelt sind. Die Facetten 35 können in gleicher Weise ausgebildet sein, wie in Verbindung mit Fig. 8 - 10 beschrieben wurde.

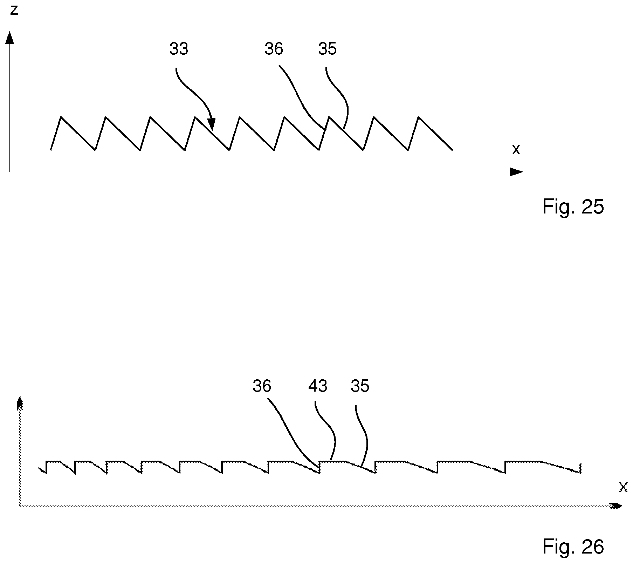

In Fig. 25 ist eine Schnittansicht einer weiteren Fresnel-Struktur 33 gezeigt. Bei dieser Fresnel-Struktur 33 erstrecken sich die Flanken 36 nicht wie bei den meisten bisher beschriebenen Ausführungsformen senkrecht (also hier in z-Richtung), sondern sind ebenfalls etwas geneigt. Dies vereinfacht die Fertigung der Fresnel-Struktur 33. Jedoch ist es bevorzugt, wenn der Neigungswinkel der Flanken 36 möglichst klein ist, so daß sie quasi senkrecht verlaufen. Diese Ausbildung der Facetten kann auch bei der Struktur gemäß Fig. 2 -14 vorgesehen werden.

Die in Verbindung mit Fig. 15 - 25 bisher beschriebenen Fresnel-Strukturen 33 waren zusammenhängende Fresnel-Strukturen. Darunter wird hier verstanden, daß die einzelnen 35 stets durch die Flanken 36 miteinander verbunden sind. Es ist jedoch auch möglich, die 35 voneinander beabstandet vorzusehen und zwischen den einzelnen 35 Abschnitte 43 einzufügen, die beispielsweise Abschnitte der Grundfläche 41 sein können. Dies kann einfach dadurch realisiert werden, daß von der ermittelten Fresnel-Fläche $z_F$ Bereiche bzw. Abschnitte durch den Verlauf der Grundfläche $z_{Grundfläche}$ in diesen Abschnitten ersetzt werden. Ein Profil einer solchen Fresnel-Struktur 33 ist in Fig. 26 schematisch angedeutet. Die Ausbildung entspricht im wesentlichen der in Verbindung mit Fig. 2 - 14 beschriebenen Ausführungsformen.

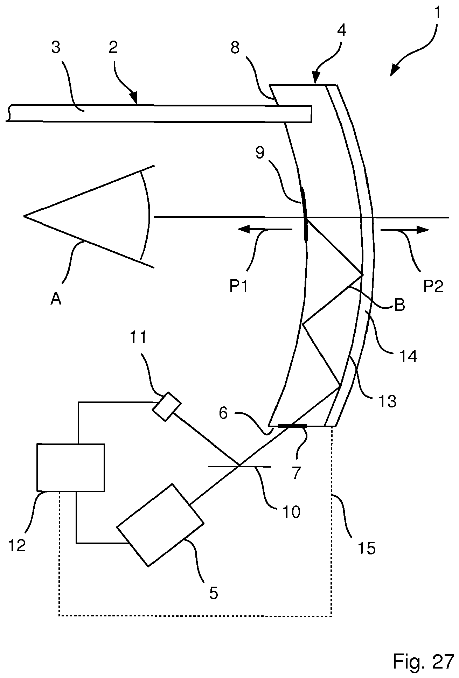

In Fig. 27 ist eine weitere Ausführungsform gezeigt, wobei gleiche Elemente im Vergleich zu der in Verbindung mit Fig. 1 - 26 beschriebenen Ausführungsformen mit gleichen Bezugszeichen bezeichnet sind und zur Erläuterung der Funktion dieser Elemente auf die entsprechende Beschreibung zu Fig. 1 - 26 verwiesen wird.

Im Unterschied zu der Ausführungsform von Fig. 1 ist bei der Ausführungsform von Fig. 27 auf der Vorderseite eine transmissionsregelnde bzw. phototrope Schicht 14 ausgebildet. Diese Schicht 14 kann als passive Schicht verwirklicht sein, wobei bei zunehmender Umgebungshelligkeit der Transmissionsgrad abnimmt. Somit wird die vom Benutzer wahrnehmbare Helligkeit geringer. Nachdem jedoch mittels dem Detektor das Umgebungslicht nach Durchlaufen der phototropen Schicht 14 gemessen wird, kann der Einfluß der phototropen Schicht bei Steuerung des Bilderzeugungsmoduls 5 berücksichtigt werden. Damit ist eine sehr gute Anpassung der erzeugten Bildes an die für den Benutzer wahrnehmbare Umgebungshelligkeit möglich.

Die phototrope Schicht kann auch als aktive Schicht 14 (beispielsweise eine Flüssigkristallbeschichtung) ausgebildet sein. Die Transmission bzw. der Transmissionsgrad der aktiven phototropen Schicht 14 wird durch die Steuereinheit 12 über die gestrichelt eingezeichnete Leitung 15 eingestellt. Damit kann eine optimale Anpassung von dem erzeugten Bild mittels des Bilderzeugungsmoduls 5 und der wahrnehmbaren Umgebung für den Benutzer durchgeführt werden.

Die Regelung der Anzeigevorrichtung kann z.B. auf einen optimalen Kontrast ausgerichtet sein, wobei der sichtbare Kontrast (Weberkontrast) Bildleuchtdichte $L'_{Bild}$ zu Umfeldleuchtdichte $L'_{Umfeld}$ über einem Schwellkontrast liegen und der sichtbare Kontrast (Weberkontrast) Bildgeber-Schwarzpegel (Bildleuchtdichte für schwarze Bildpunkte) zu Umfeldleuchtdichte $L'_{Umfeld}$ unter dem Schwellenkontrast liegen sollte.

Um dies zu erreichen, sollte die Leuchtdichte der Dateneinspiegelung (des erzeugten Bildes) sehr hoch und die Leuchtdichte des Bilderzeugungsmoduls 5 im ausgeschalteten Zustand (Schwarzpegel) sehr klein sein. Dies kann durch eine Maximierung des Displaxkontrastes erreicht werden, wie z.B. bei der Ausführungsform von Fig. 1. Diese Maximierung ist jedoch durch das eingesetzte Bilderzeugungsmodul 5 begrenzt. Mit den derzeit verfügbaren Bilderzeugungsmodulen 5 liegt der Displaykontrast bei maximal 100:1. Ferner kann die Umfeldleuchtdichte unabhängig von der Dateneinspiegelung aktiv verringert werden, wie dies bei der Ausführungsform von Fig. 27 der Fall ist. Bei dieser Ausführungsform kann im Gegensatz zur Ausführungsform von Fig. 1, bei der ab einer bestimmten Umfeldleuchtdichte selbst mit der maximal erreichbaren Leuchtdichte des Bilderzeugungsmoduls keine Wahrnehmung des erzeugten Bildes mehr garantiert werden kann, auch für höherdynamische Leuchtdichtehintergrundszenen gewährleistet werden, daß das erzeugte Bild wahrnehmen ist.

Aufgrund der phototropen Schicht 14 müssen lediglich die obigen Formeln (1) und (3) wie folgt angepaßt werden:

$$L'_e(\lambda)_{Umfeld} = L_e(\lambda)_{Umfeld}(\lambda) * \tau(\lambda)_{Brillenglas} * \tau_5(\lambda, L_e) \qquad (1')$$

wobei $\tau_5$ der Transmissionsgrad der phototropen Schicht 14 ist. Formel 3 änderst sich wie folgt:

$$L''_e(\lambda)_{Umfeld} = L_e(\lambda)_{Umfeld}(\lambda) * \prod_{Anzahl} \eta_1 * \tau(\lambda)_2 * \tau(\lambda)_3 * \tau_5(\lambda, L_e) \qquad (3')$$

Die Regelung der Anzeigevorrichtung gemäß Fig. 27 kann in gleicher Weise durchgeführt werden, wie oben für die Ausführungsform von Fig. 1 beschrieben wurde. Da $\tau_5$ der phototropen Schicht 14 im Bereich von 0,1 - 0,9 variieren kann, ist der maximal erreichbare Kontrast bei der Ausführungsform von Fig. 27 deutlich höher als bei der Ausführungsform von Fig. 1.

## Patentansprüche

1. Anzeigevorrichtung mit
   einer auf den Kopf eines Benutzers aufsetzbaren Haltevorrichtung (2),
   einem an der Haltevorrichtung (2) befestigten Multifunktionsglas (4), durch das der Benutzer im aufgesetzten Zustand der Haltevorrichtung die reale Umgebung wahrnehmen kann und das einen ersten und zweiten Auskoppelabschnitt (9, 7) sowie einen Einkoppelabschnitt (7) aufweist,
   einem Bilderzeugungsmodul (5), das ein Bild erzeugt und über den Einkoppelabschnitt (7) so in das Multifunktionsglas (4) einkoppelt, daß es im Multifunktionsglas (4) bis zum ersten Auskoppelabschnitt (9) geführt wird, der im auf den Kopf aufgesetzten Zustand der Haltevorrichtung (2) eine Umlenkung des Bildes in Richtung zum Benutzer so bewirkt, daß der Benutzer das Bild in Überlagerung mit der realen Umgebung wahrnehmen kann,
   sowie einer Steuereinheit (12) für das Bilderzeugungsmodul (5),
   **dadurch gekennzeichnet, daß**
   die Anzeigevorrichtung einen mit der Steuereinheit (12) verbundenen Detektor (11) aufweist, der die Intensität von über den ersten Auskoppelabschnitt (9) in das Multifunktionsglas (4) eingekoppeltem, in diesem bis zum zweiten Auskoppelabschnitt (7) geführtem und über den zweiten Auskoppelabschnitt (7) aus dem Multifunktionsglas (4) ausgekoppeltem Umgebungslicht mißt,
wobei die Steuereinheit (12) in Abhängigkeit der vom Detektor (11) gemessenen Intensität die Helligkeit bei der Erzeugung des Bildes mittels des Bilderzeugungsmoduls (5) steuert.

2. Anzeigevorrichtung nach Anspruch 1, **dadurch gekennzeichnet, daß** der zweite Auskoppelabschnitt und der Einkoppelabschnitt derselbe Abschnitt (7) sind, und/oder **dadurch gekennzeichnet, daß** zwischen dem zweiten Auskoppelabschnitt (7) und dem Bilderzeugungsmodul (5) ein Strahlteiler (10) angeordnet ist, der das aus dem zweiten Auskoppelabschnitt (7) ausgekoppelte Licht auf den Detektor (11) lenkt.

3. Anzeigevorrichtung nach einem der obigen Ansprüche, **dadurch gekennzeichnet, daß** das Bild im Multifunktionsglas (4) entlang eines Bildstrahlenganges geführt wird, wobei das über den ersten Auskoppelabschnitt (9) in das Multifunktionsglas (4) eingekoppelte Umgebungslicht den Bildstrahlengang durchläuft, und/oder **dadurch gekennzeichnet, daß** die Steuereinheit (12) während der Intensitätsmessung mittels des Detektors (11) die Bilderzeugung des Bilderzeugungsmoduls unterbricht.

4. Anzeigevorrichtung nach einem der obigen Ansprüche, **dadurch gekennzeichnet, daß** auf einer Vorderseite (13) des Multifunktionsglases eine phototrope Schicht ausgebildet ist, wobei die phototrope Schicht bevorzugt als passive Schicht oder als aktive Schicht ausgebildet ist, die mittels der Steuereinheit (12) gesteuert wird.

5. Anzeigevorrichtung nach einem der obigen Ansprüche, **dadurch gekennzeichnet, daß** der erste Auskoppelabschnitt (9) als diffraktiv wirkendes Element auf der Vorderseite (13) oder Rückseite (8) des Multifunktionsglases ausgebildet ist, und/oder **dadurch gekennzeichnet, daß** der Detektor (11) die Intensität ortsaufgelöst mißt und die Steuereinheit (12) die Helligkeit ortsaufgelöst im erzeugten Bild steuert.

6. Anzeigevorrichtung nach einem der obigen Ansprüche, **dadurch gekennzeichnet, daß** der erste Auskoppelabschnitt (9) einen ersten Abschnitt (20) und einen zweiten Abschnitt (21) aufweist,
wobei nur der erste Abschnitt (20), der aus einer Vielzahl von voneinander beabstandeten, reflektiven und/oder refraktiven Umlenkelementen (22) gebildet ist, die Umlenkung des Bildes durch Reflexion und/oder Brechung bewirkt, wobei bevorzugt der erste Abschnitt (20) eine abbildende Funktion für das Bild besitzt.

7. Anzeigevorrichtung nach einem der obigen Ansprüche, **dadurch gekennzeichnet, daß** der erste Auskoppelabschnitt (9) einen dritten Abschnitt mit einer Vielzahl von voneinander beabstandeten, reflektiven und/oder refraktiven zweiten Umlenkelementen und einen vierten Abschnitt aufweist,
wobei der vom Auskoppelabschnitt (9) transmittierte Teil des einfallenden Umgebungslichts für den Benutzer zur Wahrnehmung der Umgebung dient und der an den zweiten Umlenkelementen durch Reflexion und/oder Brechung umgelenkte Teil des einfallenden Umgebungslichtes zur Intensitätsmessung dient.

8. Anzeigevorrichtung nach einem der obigen Ansprüche, **dadurch gekennzeichnet, daß** der zweite Auskoppelabschnitt und/oder der Einkoppelabschnitt als Fresnel-Struktur mit abbildender Eigenschaft ausgebildet ist/sind, wobei bevorzugt die Fresnel-Struktur (33) mehrere Fresnel-Segmente (34) aufweist und
die optisch wirksamen Facetten (35) der Fresnel-Segmente (34) optisch einer gedachten optischen Wirkfläche (38) entsprechen, die gekrümmt ist und keine Spiegel- oder Rotationssymmetrie aufweist und insbesondere keine Translationssymmetrie aufweist.

9. Anzeigeverfahren für eine Anzeigevorrichtung mit
einer auf den Kopf eines Benutzers aufsetzbaren Haltevorrichtung,
einem an der Haltevorrichtung befestigten Multifunktionsglas, durch das der Benutzer im aufgesetzten Zustand der Haltevorrichtung die reale Umgebung wahrnehmen kann und das einen ersten und zweiten Auskoppelabschnitt sowie einen Einkoppelabschnitt aufweist,
einem Bilderzeugungsmodul, das ein Bild erzeugt und über den Einkoppelabschnitt so in das Multifunktionsglas einkoppelt, daß es im Multifunktionsglas bis zum ersten Auskoppelabschnitt geführt wird, der im auf den Kopf aufgesetzten Zustand der Haltevorrichtung eine Umlenkung des Bildes in Richtung zum Benutzer so bewirkt, daß der Benutzer das Bild in Überlagerung mit der realen Umgebung wahrnehmen kann,
**dadurch gekennzeichnet, daß**
die Intensität von über den ersten Auskoppelabschnitt in das Multifunktionsglas eingekoppeltem, in diesem bis zum zweiten Auskoppelabschnitt geführtem und über den zweiten Auskoppelabschnitt aus dem Multifunktionsglas ausgekoppeltem Umgebungslicht gemessen und in Abhängigkeit der gemessenen Intensität die Helligkeit des Bildes gesteuert wird.

10. Verfahren nach Anspruch 9, **dadurch gekennzeichnet, daß** der zweite Auskoppelabschnitt und der Einkoppelabschnitt derselbe Abschnitt sind, und/oder **dadurch gekennzeichnet, daß** zwischen dem zweiten Auskoppelabschnitt und dem Bilderzeugungsmodul ein Strahlteiler angeordnet ist, der das aus dem zweiten Auskoppelabschnitt ausgekoppelte Licht auf den Detektor lenkt, und/oder **dadurch gekennzeichnet, daß** das Bild im Multifunktionsglas entlang eines Bildstrahlenganges geführt wird, wobei das über den ersten Auskoppelabschnitt in das Multifunktionsglas eingekoppelte Umgebungslicht den Bildstrahlengang durchläuft, und/oder **dadurch gekennzeichnet, daß** während der Intensitätsmessung die Bilderzeugung mittels des Bilderzeugungsmoduls unterbrochen wird.

11. Verfahren nach Anspruch 9 oder 10, **dadurch gekennzeichnet, daß** auf einer Vorderseite des Multifunktionsglases eine phototrope Schicht ausgebildet wird, wobei die phototrope Schicht bevorzugt als passive Schicht oder als aktive Schicht ausgebildet wird.

12. Verfahren nach einem der Ansprüche 9 bis 11, **dadurch gekennzeichnet, daß** der erste Auskoppelabschnitt als diffraktiv wirkendes Element auf der Vorderseite oder Rückseite des Multifunktionsglases ausgebildet wird, und/oder bei dem die Intensität ortsaufgelöst gemessen und die Helligkeit im erzeugten Bild ortsaufgelöst gesteuert wird.

13. Verfahren nach einem der Ansprüche 9 bis 12, **dadurch gekennzeichnet, daß** der erste Auskoppelabschnitt (9) einen ersten Abschnitt (20) und einen zweiten Abschnitt (21) aufweist, wobei nur der erste Abschnitt (20), der aus einer Vielzahl von voneinander beabstandeten, reflektiven und/oder refraktiven Umlenkelementen (22) gebildet ist, die Umlenkung des Bildes durch Reflexion und/oder Brechung bewirkt, wobei bevorzugt der erste Abschnitt (20) eine abbildende Funktion für das Bild besitzt.

14. Verfahren nach einem der Ansprüche 9 bis 13, **dadurch gekennzeichnet, daß** der erste Auskoppelabschnitt (9) einen dritten Abschnitt mit einer Vielzahl von voneinander beabstandeten, reflektiven und/oder refraktiven zweiten Umlenkelementen und einen vierten Abschnitt aufweist, wobei der vom Auskoppelabschnitt (9) transmittierte Teil des einfallenden Umgebungslichts für den Benutzer zur Wahrnehmung der Umgebung dient und der an den zweiten Umlenkelementen durch Reflexion und/oder Brechung umgelenkte Teil des einfallenden Umgebungslichtes zur Intensitätsmessung dient.

15. Verfahren nach einem der Ansprüche 9 bis 14, **dadurch gekennzeichnet, daß** der zweite Auskoppelabschnitt und/oder der Einkoppelabschnitt als Fresnel-Struktur mit abbildender Eigenschaft ausgebildet ist/sind, wobei bevorzugt die Fresnel-Struktur (33) mehrere Fresnel-Segmente (34) aufweist und die optisch wirksamen Facetten (35) der Fresnel-Segmente (34) optisch einer gedachten optischen Wirkfläche (38) entsprechen, die gekrümmt ist und keine Spiegel- oder Rotationssymmetrie aufweist und insbesondere keine Translationssymmetrie aufweist.

## Claims

1. Display device with
   a holding device (2) that can be fitted onto the head of a user,
   a multifunctional glass (4) that is attached to the holding device (2) and through which the user can perceive the actual surroundings when the holding device is fitted on and which has a first and second coupling-out section (9, 7) as well as a coupling-in section (7),
   an image generation module (5) which generates an image and couples it into the multifunctional glass (4) via the coupling-in section (7) such that it is guided in the multifunctional glass (4) to the first coupling-out section (9) which effects a deflection of the image in the direction of the user when the holding device (2) is fitted on his head such that the user can perceive the image in superimposition with the actual surroundings,
   as well as a control unit (12) for the image generation module (5),
   **characterized in that**
   the display device has a detector (11) that is connected to the control unit (12) and that measures the intensity of ambient light coupled via the first coupling-out section (9) into the multifunctional glass (4), guided in the latter to the second coupling-out section (7) and coupled out of the multifunctional glass (4) via the second coupling-out section (7),
   wherein the control unit (12) controls the brightness during the generation of the image by means of the image generation module (5) depending on the intensity measured by the detector (11).

2. Display device according to claim 1, **characterized in that** the second coupling-out section and the coupling-in section are the same section (7), and/or **characterized in that** a beam splitter (10) which directs the light coupled out of the second coupling-out section (7) onto the detector (11) is arranged between the second coupling-out section (7) and the image generation module (5).

3. Display device according to one of the above claims, **characterized in that** the image is guided in the multifunctional glass (4) along an image beam path, wherein the ambient light coupled into the multifunctional glass (4) via the first coupling-out section (9) passes through the image beam path, and/or **characterized in that** the control unit (12) interrupts the image generation of the image generation module during the intensity measurement by means of the detector (11).

4. Display device according to one of the above claims, **characterized in that** a phototropic layer is formed on a front side (13) of the multifunctional glass, wherein the phototropic layer is preferably formed as a passive layer or as an active layer which is controlled by means of the control unit (12).

5. Display device according to one of the above claims, **characterized in that** the first coupling-out section (9) is formed on the front side (13) or rear side (8) of the multifunctional glass as an element with a diffractive action, and/or **characterized in that** the detector (11) measures the intensity space-resolved and the control unit (12) controls the brightness space-resolved in the generated image.

6. Display device according to one of the above claims, **characterized in that** the first coupling-out section (9) has a first section (20) and a second section (21),
wherein only the first section (20), which is formed of a plurality of reflective and/or refractive deflecting elements (22) spaced apart from each other, effects the deflection of the image by reflection and/or refraction, wherein preferably the first section (20) has an imaging function for the image.

7. Display device according to one of the above claims, **characterized in that** the first coupling-out section (9) has a third section with a plurality of reflective and/or refractive second deflecting elements spaced apart from each other and a fourth section,
wherein the part of the incident ambient light transmitted by the coupling-out section (9) serves to make the surroundings perceptible for the user and the part of the incident ambient light deflected by reflection and/or refraction at the second deflecting elements serves to measure intensity.

8. Display device according to one of the above claims, **characterized in that** the second coupling-out section and/or the coupling-in section is/are formed as a Fresnel structure with an imaging property wherein preferably the Fresnel structure (33) has several Fresnel segments (34) and
the optically effective facets (35) of the Fresnel segments (34) optically correspond to an imaginary optical effective surface (38) which is curved and does not have mirror or rotational symmetry and in particular no translational symmetry.

9. Display method for a display device with
a holding device that can be fitted onto the head of a user,
a multifunctional glass that is attached to the holding device and through which the user can perceive the actual surroundings when the holding device is fitted on and which has a first and second coupling-out section as well as a coupling-in section,
an image generation module which generates an image and couples it into the multifunctional glass via the coupling-in section such that it is guided in the multifunctional glass to the first coupling-out section which effects a deflection of the image in the direction of the user when the holding device is fitted on his head such that the user can perceive the image in superimposition with the actual surroundings,
**characterized in that**
the intensity of ambient light coupled via the first coupling-out section into the multifunctional glass, guided in the latter to the second coupling-out section and coupled out of the multifunctional glass via the second coupling-out section is measured and the brightness of the image is controlled depending on the intensity measured.

10. Method according to claim 9, **characterized in that** the second coupling-out section and the coupling-in section are the same section, and/or **characterized in that** a beam splitter which directs the light coupled out of the second coupling-out section onto the detector is arranged between the second coupling-out section and the image generation module, and/or **characterized in that** the image is guided in the multifunctional glass along an image beam path, wherein the ambient light coupled into the multifunctional glass via the first coupling-out section passes through the image beam path, and/or **characterized in that** the image generation by means of the image generation module is interrupted during the intensity measurement.

11. Method according to claim 9 or 10, **characterized in that** a phototropic layer is formed on a front side of the multifunctional glass, wherein the phototropic layer is preferably formed as a passive layer or as an active layer.

12. Method according to one of claims 9 to 11, **characterized in that** the first coupling-out section is formed on the front side or rear side of the multifunctional glass as an element with a diffractive action, and/or in which the intensity is measured space-resolved and the brightness in the generated image is controlled space-resolved.

13. Method according to one of claims 9 to 12, **characterized in that** the first coupling-out section (9) has a first section (20) and a second section (21),
wherein only the first section (20), which is formed of a plurality of reflective and/or refractive deflecting elements (22) spaced apart from each other, effects the deflection of the image by reflection and/or refraction, wherein preferably the first section (20) has an imaging function for the image.

14. Method according to one of claims 9 to 13, **characterized in that** the first coupling-out section (9) has a third section with a plurality of reflective and/or refractive second deflecting elements spaced apart from each other and a fourth section,
wherein the part of the incident ambient light transmitted by the coupling-out section (9) serves to make the surroundings perceptible for the user and the part of the incident ambient light deflected by reflection and/or refraction at the second deflecting elements serves to measure intensity.

15. Method according to one of claims 9 to 14, **characterized in that** the second coupling-out section and/or the coupling-in section is/are formed as a Fresnel structure with an imaging property, wherein preferably the Fresnel structure (33) has several Fresnel segments (34) and
the optically effective facets (35) of the Fresnel segments (34) optically correspond to an imaginary optical effective surface (38) which is curved and does not have mirror or rotational symmetry and in particular has no translational symmetry.

**Revendications**

1. Dispositif d'affichage comprenant
un dispositif de maintien (2) pouvant être mis en place sur la tête d'un utilisateur, un verre multifonction (4) fixé au dispositif de maintien (2), grâce auquel, dans l'état mis en place du dispositif de maintien, l'utilisateur peut percevoir l'environnement réel et lequel présente une première et une deuxième partie de découplage (9, 7) ainsi qu'une partie de couplage (7),
un module de génération d'image (5) qui génère une image et assure son couplage via la partie de couplage (7) dans le verre multifonction (4) d'une manière telle qu'elle est conduite dans le verre multifonction (4) jusqu'à la première partie de découplage (9), laquelle, dans l'état mis en place du dispositif de maintien (2) sur la tête, produit une déviation de l'image en direction de l'utilisateur d'une manière telle que l'utilisateur peut percevoir l'image en superposition avec l'environnement réel, ainsi qu'une unité de commande (12) pour le module de génération d'image (5),
**caractérisé en ce que**
le dispositif d'affichage présente un détecteur (11) relié à l'unité de commande (12), lequel mesure l'intensité de la lumière ambiante couplée via la première partie de découplage (9) dans le verre multifonction (4), conduite dans celui-ci jusqu'à la deuxième partie de découplage (7) et découplée du verre multifonction (4) via la deuxième partie de découplage (7),
dans lequel, en fonction de l'intensité mesurée par le détecteur (11), l'unité de commande (12) assure la commande de la luminosité lors de la génération de l'image au moyen du module de génération d'image (5).

2. Dispositif d'affichage selon la revendication 1, **caractérisé en ce que** la deuxième partie de découplage et la partie de couplage sont la même partie (7), et/ou **caractérisé en ce qu'**un séparateur de faisceau (10) est disposé entre la deuxième partie de découplage (7) et le module de génération d'image (5), lequel séparateur dirige la lumière découplée de la deuxième partie de découplage (7) vers le détecteur (11).

3. Dispositif d'affichage selon l'une des revendications ci-dessus, **caractérisé en ce que** l'image dans le verre multifonction (4) est conduite le long d'une trajectoire de faisceau d'image, dans lequel la lumière ambiante couplée dans le verre multifonction (4) via la première partie de découplage (9) parcourt la trajectoire de faisceau d'image, et/ou **caractérisé en ce que**, pendant la mesure de l'intensité au moyen du détecteur (11), l'unité de commande (12) interrompt la génération d'image du module de génération d'image.

4. Dispositif d'affichage selon l'une des revendications ci-dessus, **caractérisé en ce que**, sur une face avant (13) du verre multifonction, une couche phototropique est réalisée, dans lequel la couche phototropique est de préférence réalisée en tant que couche passive ou couche active, laquelle est commandée au moyen de l'unité de commande (12).

5. Dispositif d'affichage selon l'une des revendications ci-dessus, **caractérisé en ce que** la première partie de découplage (9) est réalisée en tant qu'élément à effet diffractif sur la face avant (13) ou la face arrière (8) du verre multifonction, et/ou **caractérisé en ce que** le détecteur (11) mesure l'intensité de façon résolue localement et l'unité de commande (12) assure la commande de la luminosité de façon résolue localement dans l'image générée.

6. Dispositif d'affichage selon l'une des revendications ci-dessus, **caractérisé en ce que** la première partie de découplage (9) présente une première partie (20) et une deuxième partie (21), dans lequel seule la première partie (20), qui est formée par une pluralité d'éléments de déviation (22) réflectifs et/ou réfractifs espacés les uns des autres, produit la déviation de l'image par réflexion et/ou réfraction, dans lequel de préférence la première partie (20) possède une fonction de reproduction pour l'image.

7. Dispositif d'affichage selon l'une des revendications ci-dessus, **caractérisé en ce que** la première partie de découplage (9) présente une troisième partie avec une pluralité de deuxièmes éléments de déviation réflectifs et/ou réfractifs espacés les uns des autres et une quatrième partie,
dans lequel la partie de la lumière ambiante incidente transmise par la partie de découplage (9) sert à la perception de l'environnement pour l'utilisateur, et la partie de la lumière ambiante incidente déviée par réflexion et/ou réfraction au niveau des deuxièmes éléments de déviation sert à la mesure de l'intensité.

8. Dispositif d'affichage selon l'une des revendications ci-dessus, **caractérisé en ce que** la deuxième partie de découplage et/ou la partie de couplage est/sont réalisée(s) en tant que structure de Fresnel avec une propriété de reproduction, dans lequel la structure de Fresnel (33) présente de préférence plusieurs segments de Fresnel (34) et les facettes à effet optique (35) des segments de Fresnel (34) correspondent optiquement à une surface active optique imaginaire (38), laquelle est courbée et ne présente pas de symétrie spéculaire ou de rotation, et ne présente en particulier pas de symétrie de translation.

9. Procédé d'affichage pour un dispositif d'affichage comprenant
un dispositif de maintien pouvant être mis en place sur la tête d'un utilisateur,
un verre multifonction, fixé sur le dispositif de maintien, grâce auquel, dans l'état mis en place du dispositif de maintien, l'utilisateur peut percevoir l'environnement réel et lequel présente une première et une deuxième partie de découplage ainsi qu'une partie de couplage,
un module de génération d'image qui génère une image et assure son couplage via la partie de couplage dans le verre multifonction d'une façon telle qu'elle est conduite dans le verre multifonction jusqu'à la première partie de découplage, laquelle, dans l'état mis en place du dispositif de maintien sur la tête, produit une déviation de l'image en direction de l'utilisateur d'une façon telle que l'utilisateur peut percevoir l'image en superposition avec l'environnement réel,
**caractérisé en ce que**
l'intensité de la lumière ambiante couplée via la première partie de découplage dans le verre multifonction, conduite dans celui-ci jusqu'à la deuxième partie de découplage et découplée du verre multifonction via la deuxième partie de découplage est mesurée, et qu'en fonction de l'intensité mesurée, la luminosité de l'image est commandée.

10. Procédé selon la revendication 9, **caractérisé en ce que** la deuxième partie de découplage et la partie de couplage sont la même partie, et/ou **caractérisé en ce qu'**un séparateur de faisceau est disposé entre la deuxième partie de découplage et le module de génération d'image, lequel séparateur dirige la lumière découplée de la deuxième partie de découplage vers le détecteur, et/ou **caractérisé en ce que** l'image dans le verre multifonction est conduite le long d'une trajectoire de faisceau d'image, dans lequel la lumière ambiante couplée dans le verre multifonction via la première partie de découplage parcoure la trajectoire de faisceau d'image, et/ou **caractérisé en ce que**, pendant la mesure de l'intensité, la génération d'image est interrompue au moyen du module de génération d'image.

11. Procédé selon la revendication 9 ou 10, **caractérisé en ce que**, sur la face avant du verre multifonction, une couche phototropique est réalisée, dans lequel la couche phototropique est de préférence réalisée en tant que couche passive ou couche active.

12. Procédé selon l'une des revendications 9 à 11, **caractérisé en ce que** la première partie de découplage est réalisée en tant qu'élément à effet diffractif sur la face avant ou la face arrière du verre multifonction, et/ou dans lequel l'intensité est mesurée de façon résolue localement et la luminosité dans l'image générée est commandée de façon résolue localement.

13. Procédé selon l'une des revendications 9 à 12, **caractérisé en ce que** la première partie de découplage (9) présente une première partie (20) et une deuxième partie (21),
dans lequel seule la première partie (20), qui est formée par une pluralité d'éléments de déviation (22) réflectifs et/ou réfractifs espacés les uns des autres, produit la déviation de l'image par réflexion et/ou réfraction, dans lequel de préférence la première partie (20) possède une fonction de reproduction pour l'image.

14. Procédé selon l'une des revendications 9 à 13, **caractérisé en ce que** la première partie de découplage (9) présente une troisième partie avec une pluralité de deuxièmes éléments de déviation réflectifs et/ou réfractifs espacés les uns des autres et une quatrième partie,
dans lequel la partie de la lumière ambiante incidente transmise par la partie de découplage (9) sert à la perception de l'environnement pour l'utilisateur, et la partie de la lumière ambiante incidente déviée par réflexion et/ou réfraction au niveau des deuxièmes éléments de déviation sert à la mesure de l'intensité.

15. Procédé selon l'une des revendications 9 à 14, **caractérisé en ce que** la deuxième partie de découplage et/ou la partie de couplage est/sont réalisée(s) en tant que structure de Fresnel avec une propriété de reproduction, dans lequel la structure de Fresnel (33) présente de préférence plusieurs segments de Fresnel (34) et
les facettes à effet optique (35) des segments de Fresnel (34) correspondent optiquement à une surface active optique imaginaire (38), laquelle est courbée et ne présente pas de symétrie spéculaire ou de rotation, et ne présente en particulier pas de symétrie de translation.

Fig. 1

Fig. 2

Fig. 3

Fig. 4

Fig. 5

Fig. 6

Fig. 7

Fig. 8

23

BS'

V

22

BS

Fig. 9

23

BS'

V

24

22

BS

Fig. 10

23

BS'

22

BS

Profil(x)

X

Fig. 11

Profil(x)

X

Fig. 12

Profil(x)

X

Fig. 13

Fig. 14

Fig. 15

Fig. 16

Fig. 17

Fig. 18

Fig. 19

Fig. 20

Fig. 21

Fig. 22

Fig. 23

Fig. 24

z

33    36    35

x

Fig. 25

36    43    35

x

Fig. 26

Fig. 27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0922985 A1
- WO 2008089992 A1

- WO 0028592 A1